# EUROPÄISCHE PATENTSCHRIFT

(11) **EP 3 748 930 B1**
(45) Veröffentlichungstag und Bekanntmachung des Hinweises auf die Patenterteilung: **27.08.2025**
(21) Anmeldenummer: 20177824.8
(22) Anmeldetag: 02.06.2020
(51) Int. Cl.: H04L 9/40, H04W 12/12, G06F 21/62, G01D 4/00, H04W 12/75

(54) **VERFAHREN UND VORRICHTUNG ZUM ÜBERTRAGEN VON DATEN MITTELS FUNKTELEGRAMMEN IN EINEM GEMEINSAMEN FUNKNETZ EINES VERBRAUCHSABLESESYSTEMS UND EINES ENERGIE-EFFIZIENZ-SYSTEMS SOWIE ENDGERÄT HIERFÜR**
METHOD AND DEVICE FOR TRANSMITTING DATA USING WIRELESS DATAGRAMS IN A SHARED RADIO NETWORK OF A CONSUMPTION READING SYSTEM AND AN ENERGY EFFICIENCY SYSTEM AND A TERMINAL FOR SAME
PROCÉDÉ ET DISPOSITIF DE TRANSMISSION DES DONNÉES AU MOYEN DES TÉLÉGRAMMES RADIO DANS UN RÉSEAU RADIO COMMUN D'UN SYSTÈME DE LECTURE DE CONSOMMATION ET D'UN SYSTÈME D'EFFICACITÉ ÉNERGÉTIQUE AINSI QU'ÉQUIPEMENT TERMINAL ASSOCIÉ

(30) Priorität: 03.06.2019 DE 102019114840
(43) Veröffentlichungstag der Anmeldung: 09.12.2020
(73) Patentinhaber: Techem Energy Services GmbH, 65760 Eschborn (DE)
(72) Erfinder: Gutmann, Norbert, 64295 Darmstadt (DE); Kähler, Dr. Arne, 61350 Bad Homburg (DE); Simon, Winfried, 64579 Gernsheim (DE)
(74) Vertreter: Keil & Schaafhausen Patentanwälte PartGmbB

(56) Entgegenhaltungen:
- EP-A2- 2 631 599
- ANONYMOUS: "Open Metering System Specification Volume 2 Primary Communication Issue 4.1.2 / 2016-12-16 RELEASE", 16 December 2016 (2016-12-16), XP055612370, Retrieved from the Internet <URL:https://oms-group.org/fileadmin/files/download4all/specification/Vol2/4.1.2/OMS-Spec_Vol2_Primary_v412.pdf> [retrieved on 20190812]
- EFTHYMIOU C ET AL: "Smart Grid Privacy via Anonymization of Smart Metering Data", SMART GRID COMMUNICATIONS (SMARTGRIDCOMM), 2010 FIRST IEEE INTERNATIONAL CONFERENCE ON, IEEE, PISCATAWAY, NJ, USA, 4 October 2010 (2010-10-04), pages 238 - 243, XP031790234, ISBN: 978-1-4244-6510-1

## Beschreibung

Die Erfindung nach dem Oberbegriff der Ansprüche 1, 8 und 10 ist anzuwenden in einem gemeinsamen Funknetzwerk für ein Verbrauchsablesesystem und ein Energie-Effizienz-System. Mit einem Energie-Effizienz-System ist ein System gemeint, das darauf abzielt, den Energieverbrauch zu reduzieren und die eingesetzte Primärenergie effektiv zu verwerten. Mit anderen Worten dient das System der Energieeinsparung und kann auch als Energieeinsparsystem bezeichnet werden. Im folgenden Text werden die Begriffe "Energie-Effizienz-System" und "Energieeinsparsystem" daher auch synonym verwendet.

Als Verbrauchsablesesystem werden insbesondere Automatic-Meter-Reading Systeme (AMR-Systeme) mit Endgeräten zur Verbrauchswerterfassung und mit einer Datenfernübertragungseinrichtung zur Fernablesung verstanden, die dazu eingerichtet ist, die abgelesenen Verbrauchswerte an eine entfernte Datenverarbeitungseinrichtung zu übertragen. Insofern kann das hier gemeinte Verbrauchsablesesystem auch als Verbrauchsfernablesesystem bezeichnet werden.

Ziel der Fernablesung mit einem AMR-System ist es, die durch die Endgeräte erfassten Verbrauchswerte automatisiert an ein zentrales IT-System eines Verbrauchabrechnungsdienstleisters zu senden, um mit den Verbrauchswerten eine verbrauchabhängige Heizkostenabrechnung und/oder eine verbrauchabhängige Kaltwasserkostenabrechnung zu erstellen. In Mehrfamilienwohnhäusern und/oder Gewerbeimmobilien erfolgt eine verbrauchsabhängige Heizkostenabrechnung bzw. Kaltwasserkostenabrechnung durch Verteilung der Gesamtkosten für die Energie zur Wärmeerzeugung und/oder des Gesamtverbrauchs an Kaltwasser auf die Nutzer (Mieter, Wohnungseigentümer) einer Nutzeinheit (Wohnung, Gewerberaum). In der Regel umfasst das erfindungsgemäße Verbrauchsablesesystem (zumindest optional) also auch ein Verbrauchsabrechnungssystem, das in das zentrale IT-System eines Verbrauchabrechnungsdienstleisters integriert sein kann. Dabei können das Verbrauchsabrechnungssystem und das Verbrauchsablesesystem, auch wenn Sie in einem gemeinsamen System integriert sind, logisch und datentechnisch trotzdem voneinander getrennt sein und bspw. unterschiedliche Dateninformationen haben. Bspw. kann ausschließlich in dem Verbrauchsabrechnungssystem, nicht aber in der gesamten Verbrauchsablesesystem, der Einbauort respektive die verwaltungstechnische Zugehörigkeit eines Verbrauchswerts zu einer logischen Abrechnungseinheit bekannt sein, bspw. um Datenschutzanforderungen zu genügen oder eine Datensparsamkeit zu realisieren.

Das zentrale IT-System des Verbrauchabrechnungsdienstleisters stellt insbesondere eine (von den Endgeräten entfernte) Datenverarbeitungseinrichtung dar und kann einen oder mehrere zentrale Server und/oder eine Cloud-Anwendungen und/oder Cloud-Storage beinhalten. In dem zentralen IT-System können auch zentrale Datenbearbeitungseinrichtungen und optional auch zentrale Druck- und Versandeinrichtungen vorhanden sein. In der Regel ist in dem zentralen IT-System eine zentrale Datenbank vorhanden, in der die Liegenschaftsdaten wie Staat, Bundesland, Anschrift, Geokoordinaten, Eigentümername und Anschrift, Hausverwalter Name und Anschrift, Anzahl Wohnungen, Name der Nutzer / Bewohner (Mietvertrag), Information zu den in der Liegenschaft installierten Geräte (Geräte-Identifikation, Geräteart, Gerätetyp, Seriennummer, Einbauort) und weitere Informationen zu dem oder den Gebäuden gespeichert sind. Auf einer weiteren zentralen Datenbank, die von der Datenbank mit den Liegenschaftsdaten physikalisch oder logisch getrennt sein kann, sind die Ablesewerte (Verbrauchswerte, Statusinformationen der Rauchwarnmelder und dgl.) abgespeichert. Da zur Erhöhung der Datensicherheit in Funksystemen die in den Funktelegrammen enthaltenen Nutzdaten (Payload) verschlüsselt übertragen werden, ist üblicherweise in dem zentralen IT-System, welches durch IT-Firewalls besonders gegen Angriffe geschützt ist, auch eine Datenbank oder ein Bereich der Datenbank vorhanden, auf der bzw. auf dem die Schlüssel zum Entschlüsseln insbesondere der in Funktelegrammen übertragen Verbrauchsdaten abgelegt sind. Für diese Datenbank, den sogenannten "Key-Store" werden zusätzliche Schutzmechanismen vorgesehen, wie eine minimal notwenige Anzahl von User-Accounts und/oder stark eingeschränkten Zugriffsrechte. Durch diese zusätzlichen Maßnahmen ist es möglich, dass die Verbrauchsdaten nur innerhalb der im Hinblick auf Manipulation oder Datendiebstahl besonders gesicherten IT-Systeme entschlüsselt werden können.

Die Datenfernübertragung kann auch über lokal (in dem Gebäude) installierte Datensammeleinrichtungen erfolgen, die Funktelegramme der Endgeräte empfangen und ggf. auch wieder lokal aussenden (Repeater). Die lokale Datensammeleinrichtung oder eine der lokalen Datensammeleinrichtungen kann dazu eingerichtet sein, die Funktelegramme der Endgeräte zwischenspeichern und unverändert als sogenannte "Rohdatentelegramme" an eine entfernte Datenverarbeitungseinrichtung weiterzuleiten oder sofern möglich die in den Funktelegrammen beinhalteten Daten aufzubereiten und die aufbereiteten Daten an einen entfernten Datenverarbeitungseinrichtung weiterzuleiten. Die Erfassung der Funktelegramme der Endgeräte kann auch durch mobile Dantesammeleinrichtungen erfolgen (Walk-by-Verfahren).

Es ist auch möglich, dass die Endgeräte die Verbrauchs-Datenwerte mittels Datenfernübertragung unmittelbar einer entfernten Datenverarbeitungseinrichtung übermitteln. Dies kann bspw. durch ein IoT-Endgerät (Internet-of-Things) erfolgen, das die Verbrauchs-Datenwerte direkt über das Internet an eine Cloud-Anwendung als Datenverarbeitungseinrichtung überträgt.

Die in einem Gebäude installierten Verbrauchserfassungsgeräte (als Endgeräte im Sinne der Erfindung) erfassen zumindest die für eine Verbrauchsabrechnung benötigten Verbrauchsdaten und senden diese in mindestens einem Verbrauchsdaten-Funktelegramm des Funknetzes zusammen mit der Geräte-Identifikationsnummer (Geräte-ID) des Endgeräts aus. Die Geräte-ID des Endgeräts ist dem Endgerät eindeutig zugeordnet und in dem Verbrauchsablesesystem bekannt. In dem Verbrauchsabrechnungssystem ist die Geräte-ID auch als Verknüpfung der Geräte-ID mit dem Einbauort bekannt.

Zusätzlich zu den für eine Verbrauchsabrechnung mindestens benötigten Datenwerten können weitere Prozess-Datenwerte, insbesondere Sensordatenwerte, die durch das Endgerät (insbesondere Verbrauchserfassungsgerät) messtechnisch erfasst werden, durch das Verbrauchserfassungsgerät in Prozessdaten-Funktelegrammen gesendet werden. Prozessdaten im Sinne der Erfindung können insbesondere Temperaturmesswerte (Heizkörpertemperatur, Raumlufttemperatur, Vorlauftemperatur am Heizkörper, Rücklauftemperatur am Heizkörper) sein. Prozessdaten (bspw. umfassend einen oder mehrere Datenwerte), die durch ein Endgerät (insbesondere Verbrauchserfassungsgerät) erfasst werden, können auch in dem Verbrauchsdaten-Funktelegramm beinhaltet sein, oder sie können auch ausschließlich in dem Prozessdaten-Funktelegramm ausgesendet werden.

Endgeräte können insbesondere in den Nutzeinheiten (Wohnungen / Gewerberäume oder allgemein Liegenschaften) installierte Verbrauchserfassungsgeräte sein, wie etwa Wasserzähler, Wärmezähler, Kältezähler, kombinierte Kälte-Wärmezähler. Auch andere in einer Nutzeinheit installierte Zähler, wie beispielsweise Gaszähler und/oder Stromzähler können ggf. über eine Zusatzvorrichtung (wie beispielsweise ein Funk-Modul als eine Funkschnittstelle oder eine Impulszähleinrichtung mit Funksendeeinrichtung) in das Funknetzwerk eingebunden werden und sind Endgeräte im Funknetzwerk des Verbrauchsablesesystems im Sinne der Erfindung.

Weitere Geräte, die in einem Gebäude installiert sind oder sein können, die jedoch nicht zur Verbrauchserfassung verwendet werden oder dafür geeignet sind, sind Sensorgeräte (verkürzend auch als Sensoren bezeichnet). Sensoren sind etwa Temperatursensoren, Feuchtesensoren oder CO₂-Sensoren, oder Gefahrenmelder, wie Rauchwarnmelder. Sensoren sind auch Endgeräte im Funknetzwerk im Sinne der Erfindung. Sensoren senden keine Verbrauchsdaten-Funktelegramme aus, sondern sie senden Funktelegramme mit Gerätezustandsinformationen oder aktuellen Messwerten oder über einen gewissen Zeitraum ermittelte, also aufbereitete Daten aus, bspw. Mittelwerte oder Maximalwerte oder Fehlerzustände mit Fehlerdauer und dgl. Solche Daten werden als Zustandswerte oder als Prozess-Datenwerte (Prozessdaten) bezeichnet.

Geräte zur Einzelraumtemperaturregelung, wie Heizkörperregler bzw. elektronische oder teilelektronische Stellventile oder lokale Versorgungspumpen an Heizkörpern oder in hydraulischen Verteilsystemen wie Fußbodenheizkreisverteilern oder Versorgungspumpen oder intelligente Stellventile in Heizkreisverteilern sind ebenso als Endgeräte im Funknetzwerk im Sinne der Erfindung anzusehen. Diese Endgeräte senden in der Regel nur Prozess-Datenwerte (Hubposition, Öffnungsgrad, Temperaturmesswerte, Schalterstellung usw.) aus.

Endgeräte im Funknetzwerk, die allerdings nicht in Nutzeinheiten wie Wohnungen oder Gewerberäumen installiert sind, sind bspw. sogenannte Haupt- oder Verteil-Zähler bzw. Unterzähler wie Stromzähler, Wärmezähler, Wasserzähler oder Gaszähler. Diese Endgeräte senden Verbrauchs-Datenwerte, Messwerte und Prozess-Datenwerte aus, wobei die Verbrauchs-Datenwerte in die Kostenverteilungsberechnung (Heizkostenabrechnung / Wasserkostenabrechnung) als "zu verteilende Verbräuche" einfließen.

Auch intelligente Heizungspumpen oder intelligente Ventile im Gebäudeanschlussbereich oder in der hydraulischen Verteilung können Funktelegramme aussenden und werden im Sinne dieser Erfindung als Endgeräte betrachtet, die Prozess-Datenwerte aussenden können.

Üblicherweise weist ein in das lokale Funknetz ausgesendetes Funktelegramm (Datenframe) die dem Endgerät (Sender) eindeutig zugeordnete Geräte-ID als Teil des Funktelegramm-Headers auf. Der Funktelegramm-Header ist nur ein Teil des gesamten Funktelegramms und wird unverschlüsselt übertragen.

Die in dem Verbrauchsdaten-Funktelegramm als Payload (Nutzdaten) bezeichnete Daten bzw. Datenwerte werden zur Erhöhung der Datensicherheit von dem Endgerät in der Regel verschlüsselt ausgesendet. Dies ist mit einem verschlüsselten Funktelegramm im Sinne dieser Beschreibung gemeint.

Um die Funktelegrammlänge zu minimieren beinhalten Verbrauchsdaten-Funktelegramme in der Regel nur solche Datenwerte, die für die Verbrauchsabrechnung erforderlich sind. Dies sind insbesondere ein oder mehrere aktuelle Zählerstände, bspw. der aktuell auf dem Zähler angezeigte Zählerstand und/oder ein oder mehrere Verbrauchswerte, die sich aus der Differenz des aktuellen Zählerstands und einem zuvor gespeicherten Zählerstand ergeben. Zu einem definierbaren Zeitpunkt können ein oder mehrere Zählerstände oder Zählerstands-Differenzen (Verbrauch über Zeitdauer) gespeichert werden und sogenannte "historische Werte" bilden, bspw. einen am Stichtag um 24:00Uhr (oder 00:00 Uhr) errechneten sogenannten "Jahres-Stichtagswert" oder einen am Monatsende gebildeten "Monatsverbrauch" oder einen am Tagesende gebildeten "Tagesverbrauch" oder dgl.

Zusätzlich zu den Zählerstandswerten oder Verbrauchs-Datenwerten können Verbrauchsdaten-Funktelegramme Datenwerte beinhalten, die den Zeitpunkt der Speicherung eines Verbrauchswertes kennzeichnen (Aktuelles Datum, Stichtagsdatum oder dgl.). Um eine Plausibilitätsprüfung der Verbrauchswerte zu ermöglichen, können in den Verbrauchsdaten-Funktelegrammen zusätzliche EndgeräteFehlerzustandsinformationen eingefügt werden, insbesondere um zu kennzeichnen, dass bei der Verbrauchswerteerfassung ein unzulässiger Gerätezustand vorlag (Messfehler) oder ein Manipulationsversuch festgestellt worden ist.

Derartige Verbrauchserfassungssysteme mit Verfahren und Vorrichtung zur Übertragung von Verbrauchsdaten in Funktelegrammen zur Ablesung der Verbrauchsdaten gemäß dem Oberbegriffe des Anspruchs 1 (AMR-System) sind aus der Veröffentlichung "Open Metering System System Specification", Volume 2 Primary Communication, Issue 4.1.2 / 2016-12-16 (OMS) bekannt.

Als Energie-Effizienz-Systeme (auch als Energieeinsparsysteme bezeichnet) im Sinne der Erfindung werden Systeme angesehen, die den (Primär-) Energiebedarf des Gebäudes erfassen, aufbereiten und transparent machen, bspw. dem Nutzer darstellen (Energiemonitoring) oder die durch Steuerung oder Regelung des Wärme- oder Kälteversorgungssystems automatisiert eine Verringerung des Energieeinsatz und somit des Energieverbrauchs bei gleichbleibendem Komfort für die Bewohner / Nutzer des Gebäudes erzielen können (Energie-Management-System / Energie-Effizienz-System).

Bei Energieeinsparsystemen, die als Energiemonitoring-Systeme ausgebildet sind, wird einem Nutzer/ Bewohner sein bisheriger und/oder aktueller Heizenergie- oder Wasserverbrauch angezeigt, und zusätzlich wird oftmals eine Prognose zum zukünftig zu erwartenden Verbrauch dargestellt. Durch Aufbereitung der Messdaten (Datenwerte) und die Anzeige (Diagramm, Statistik, Trenddarstellung, Zeitreihenanalysen oder dgl.) des (eigenen) Energieverbrauch wird dem Nutzer / Bewohner sein Energieverbrauch transparent gemacht um dadurch den Nutzer / Bewohner zu energieeinsparenden Schritten zu animieren.

Eine deutliche Verbesserung bei der Energieeinsparung, insbesondere der Energieverbrauchssenkung, kann durch Prozessautomatisierung erreicht werden. Mit einer messtechnischen Ausstattung (Messgeräte, Sensoren) des Gebäudes und der Anlage wird hierfür der aktuelle Heizungs- oder Kälteanlagenzustand und der aktuelle Energieeinsatz erfasst, und durch Regelung oder Steuerung der Wärmeoder Kälteerzeugung, bspw. durch eine rechnergesteuerte Optimierung der Sollwertvorgaben, wird ein energieeffizienter Betrieb der Anlage erreicht. Um einen Wärme- oder Kälteerzeuger zu beeinflussen, wird oftmals ein Energie-Effizienz-Modul verwendet, das lokal im Gebäude installiert ist und mit dem Wärme- oder Kälteerzeuger verbunden ist. Die Prozessvariablen (Regelgrößen, Stellbefehle und dgl.), die ein solches Energie-Effizienz-Modul für die Beeinflussung der Anlage benötigt, können lokal insbesondere durch das Energie-Effizienz-Modul selbst oder zentral, bspw. in einem IT-System oder als Cloud-Anwendung durch die Auswertung der Messdaten (Datenwerte) ermittelt werden. Ein Verfahren, das für solch ein Energieeinsparsystem, das die Energieerzeugung insbesondere in Heizungs- oder Kälteanlagen, in Nahwärme-Kraftwerken oder anderen Energieerzeugern optimiert, ist aus der EP 1 456 727 B2, der EP 1 933 220 B1 und der EP 3 091 294 B1 der Anmelderin bekannt.

Teilweise weisen die Messgeräte bzw. Sensorgeräte keine Einrichtungen auf, die eine Integration in das gemeinsame Funknetz des Verbrauchsablesesystems und des Energieeinsparsystems (Energie-Effizienz-Systems) erlauben. Häufig weisen diese Messgeräte nur Funksender zur (häufig unidirektionalen) lokal begrenzen Übertragung der erfassten Messwerte und/oder daraus abgeleiteter Datenwerte (häufig Verbrauchswerte) auf. Mit dieser lokal begrenzten Funkübertragung werden die Verbrauchsdaten- und/oder die Datenwerte von dem Sensorgerät lokal auf eine im Empfangsbereich dieser lokal begrenzten Übertragung installierte Datensammeleinrichtung übertragen. In vielen Fällen ist ein Verbrauchserfassungsoder Sensorgerät dabei einer ausgewählten Datensammelrichtung als Empfänger für die rein lokale Funkkommunikation von dem Verbrauchserfassungs- oder Sensorgerät zugeordnet. Erst dieser ausgewählte Datensammler nimmt an dem gemeinsamen Funknetz des Verbrauchsablesesystems und des Energie-Effizienz-Systems teil. Mit anderen Worten wäre das durch des Verbrauchserfassungs- oder Sensorgerät ausgesandte Funktelegramm in der lokal begrenzten Übertragung ohne Empfang durch die diesem Verbrauchserfassungs- oder Sensorgerät nicht in das System-Funknetz integrierbar. Ich solchen Fällen versteht die Erfindung die Kombination der in einer rein lokalen Umgebung angeordneten Verbrauchserfassungs- bzw. Sensorgerät und diesem zugewiesenen Datensammeleinrichtung als Endgerät, auch wenn dieses Endgerät faktisch aus einer logischen Verknüpfung von zwei verschiedenen Geräten handelt, die in einer rein lokalen Umgebung in einem auswählbar vorgegebenen und damit ausgewählten Bezug zueinander stehen. Die Geräte-ID des Endgeräts ist in diesem Fall durch die Geräte-ID des Verbrauchserfassungs- oder Sensorgeräts vorgegeben. Es ist möglich, dass mehrere Verbrauchserfassungs- bzw. Sensorgeräte einer Datensammeleinrichtung ausgewählt zugewiesen sind. Die Verbrauchserfassungs- und Sensorgeräte können auch Heizkostenverteiler, andere Verbrauchserfassungsgeräte oder sonstige Warnmelder, bspw. Rauchwarnmelder, sein.

Aus Datenschutzgründen ist gemäß EU-Datenschutz-Grundverordnung (DSGVO) die verschlüsselte Übertragung von Daten, die natürlichen Personen zugeordnet werden können, zwingend notwendig, damit nicht durch einfaches "dauerhaftes Mithören" mit einem dafür geeigneten Funkempfänger die Datenwerte aus den Funktelegrammen analysiert und auf das Verbrauchsverhalten in einer dieser Person zugeordneten Wohnung geschlossen werden kann, denn zur Entschlüsselung der Datentelegramme wird der geheime (private) Funkschlüssel benötigt. Die DSGVO fordert ausdrücklich die Datensicherheit durch Verschlüsselung der Daten, sofern dies in den Systemen technisch möglich ist, was bei Funksystemen (bspw. AMR-Systemen oder IoT-Systemen) in der Regel der Fall ist.

Verfahren zur Verschlüsselung und Entschlüsselung von Payload-Daten in Funktelegrammen sind nicht Teil der Erfindung und im Stand der Technik hinreichend bekannt, beispielsweise der anerkannte Verschlüsselungsalgorithmus des Advanced Encryption Standards (AES), wie er für Open Metering System (OMS) oder DIN EN 13757-4:2013 konforme Funktelegramme anzuwenden ist. Das AES-Verfahren ist in der Federal Information Processing Standards Publication 197 November 26, 2001 (FIPS PUB 197) standardisiert und offenbart.

Energiemonitoring- oder Energieeinspar-Systeme benötigen für die Anwendungen (Programme zur Datenverarbeitung) unverschlüsselte Datenwerte als Eingangsgrößen, bspw. also durch die Endgeräte erfasste Mess- und/oder Berechnungswerte. Diese Datenwerte werden häufig, bspw. als Stundenwert oder Stundenmittelwert, an das das Energiemonitoring- oder Energieeffizienz-Verfahren durchführenden Gerät übertragen. Diese Geräte müssen auf diese Daten zugreifen. Aus diesem Grund müssen die Daten entweder unverschlüsselt übertragen oder durch einen in den empfangenden Geräten gespeicherten Schlüssel entschlüsselt werden können. Letzteres setzt entweder die Online-Bereitstellung oder die Übertragung der geräteindividuellen Schlüssel aus der zentralen (gesicherten) Umgebung, bspw. aus dem Key-Store des IT-Systems, in die das Energiemonitoring- oder das Energieeinspar-Verfahren durchführenden lokal, d.h. im Gebäude, installierten Geräte (insbesondere das Energie-Effizienz-Modul) voraus, was sehr aufwändig ist, oder es setzt die Verwendung eines Master- oder Generalschlüssels voraus, der in vielen Geräte lokal vorgesehen ist, was ein hohes Risiko birgt, dass dieser Schlüssel irgendwann allgemein bekannt wird und die Anforderungen zur Datensicherheit dann nicht mehr erfüllt sind.

Aus der Veröffentlichung "Efthymiou C et. al: "Smart Grid Privacy via Anonymization of Smart Metering Data", SMART GRID COMMUNICATIONS (SMART-GRIDCOMM), 2010, IEEE 978-1-4244-6511-8/10 ist ein Verfahren zur sicheren Anonymisierung Zählerdaten bekannt, die häufig (zum Beispiel alle paar Minuten) von einem intelligenten Zähler gesendet werden. Obwohl solche häufigen Zählerdaten von einem Energieversorger oder einem elektrischen Energieverteilungsnetz aus betrieblichen Gründen benötigt werden, müssen diese Daten nicht unbedingt einem bestimmten intelligenten Zähler oder Verbraucher zuzuordnen sein. Sie müssen jedoch sicher einem bestimmten Ort (z. B. eine Gruppe von Häusern oder Wohnungen) innerhalb des Stromverteilungsnetzes zugeordnet werden. Zu diesem Zweck wird eine anonyme HFID (High-Frequency ID) und eine zuordenbare LFID (Low-Frequency ID) den Messdaten der Endgeräte zugewiesen, wobei die HFID dem Utility Provider und einem Smart Metering Installateur nicht bekannt sind, sondern nur in den Endgeräten selbst fest vorliegen. Dies erfordert einen aufwendigen Setup-Prozess für ein Client Data Profile (CDP) und ein Anonymous Data Profile (ADP) unter Verwendung eines besonderen Treuhandservice, jeweils zur Vereinbarung eines Datenprotokolls mit Signatur zur Ermöglichung eines Datenaustauschs. Die HFID und/oder LFID bleibt davon unberührt. Für den anonymen Datenaustausch wird ein zufälliger Zählerstand als Ausgangszählerwert angenommen. Die Verwendung eines zufälligen Zählerstands durch Permutierung von Messdaten wird auch in der DE EP 2 632 599 A2 beschrieben.

Vor diesem Hintergrund ist es Aufgabe der vorliegenden Erfindung, über ein in einem Gebäude installiertes gemeinsames Funknetz zur Verbrauchsfernablesung und zur Übertragung von Prozessdaten für ein Energieeinspar-System (Energie-Effizienz-System), Datenwerte, die zur Verbrauchsabrechnung benötigt werden, und Datenwerte, die zur Durchführung der Energiemonitoring- und/oder Energieeinsparverfahren benötigt werden, derart bereit zu stellen, dass alle Datenschutzaspekte (insbesondere die Datensparsamkeit) beachtet werden und gleichzeitig die Datenübertragung in einer für das Energieeinspar-bzw. EnergieEffizienz-Verfahren notwendigen Häufigkeit erfolgt.

Diese Aufgabe wird durch ein Verfahren mit den Merkmalen des Anspruchs 1 und mit einem Endgerät mit den Merkmalen des Anspruchs 8 und einer Vorrichtung mit den Merkmalen des Anspruchs 10 gelöst.

Es ist vorgesehen, dass in einem Gebäude (auch im Sinne einer Liegenschaft, für die eine Verbrauchsabrechnung erstellt wird und die bspw. auch ein Gebäudekomplex sein kann, der bspw. eine gemeinsame Heizungsanlage umfasst - die Begriffe werden nachfolgend synonym verwendet) installierte Endgeräte zur Verbrauchserfassung Verbrauchs-Datenwerte (dies können energiebezogene oder ressourcenbezogen Verbräuche sind) erfassen und in mindestens einem Verbrauchsdaten-Funktelegramm des Funknetzes zusammen mit einer Geräte-ID des Endgeräts aussenden. Die Geräte-ID ist dem Endgerät eindeutig zugeordnet und in dem Verbrauchsablesesystem (und in einem Verbrauchsabrechnungssystem) bekannt. Aufgrund der Bekanntheit der Geräte-ID in dem Verbrauchsabrechnungssystem mit Zuordnung zu einem Installationsort (bspw. einer Liegenschaft und/oder einer Wohnung in der Liegenschaft) sind die Verbrauchsdaten letztlich rückverfolgbar und können zur Verbrauchsabrechnungserstellung dem Nutzer / Bewohner (Person oder Personengruppe) direkt zugeordnet werden. Dies ist bei einer Verbrauchserfassung zur Verbrauchsabrechnung auch unabdingbar. Unter Datenschutzgesichtspunkten müssen derartige Daten besonders geschützt werden, damit keine Rückschlüsse auf persönliche Verhaltensweisen der Nutzer / Bewohner gezogen werden können, die ggf. für bestimmte Zwecke ausgenutzt werden könnten. Daher wird bei derartigen Verfahren immer vorgesehen, dass die Nutzdaten in den Verbrauchsdaten-Funktelegrammen mit einem Verbrauchsdaten-Schlüssel zum Verschlüsseln verschlüsselt und in verschlüsselter Form ausgesendet werden, wobei die Verschlüsselung der Nutzdaten des Verbrauchsdaten-Funktelegramms mit dem Verbrauchsdaten-Schlüssel in dem Endgerät erfolgt. Dies wird auch als Verschlüsselung der Verbrauchsdaten-Funktelegramme bezeichnet.

Ein entsprechender Verbrauchsdaten-Schlüssel zum Entschlüsseln des Verbrauchsdaten-Funktelegramms sollte, zur Erhöhung der Datensicherheit, nur innerhalb einer zentralen Daten-Umgebung des Verbrauchsablesesystems, wie des IT-Systems des Verbrauchsabrechnungsdienstleisters, vorliegen. Eine solche zentrale Daten-Umgebung kann vorzugsweise in einem gesicherten Datenbereich einer Datenbank, einem sogenannten "Key-Store" des IT-Systems, vorliegen. Dadurch kann ein hohes Maß an Datensicherheit erreicht werden, da die in dem Verbrauchsabrechnungssystem einem Einbauort, bspw. in einer Wohnung, zuordenbaren Verbrauchsdaten-Funktelegramme auf dem Kommunikationsweg durch das Funknetz nicht entschlüsselt werden können, weder in ggf. vorgesehenen Zwischenempfängern (wie bspw. Datensammlern) noch durch Abgriff von Funktelegrammen.

Erfindungsgemäß kann dazu vorgesehen sein, dass die Verbrauchsdaten-Funktelegramme ausschließlich mit dem im "Key-Store" (d.h. der zentralen Daten-Umgebung des Verbrauchsablesesystems) vorliegenden bzw. gespeicherten Verbrauchsdaten-Schlüssel zum Entschlüsseln entschlüsselt werden können. Beispielsweise kann der Verbrauchsdaten-Schlüssel zum Entschlüsseln der Daten in dem "Key-Store" des Verbrauchsabrechnungsdienstleisters zusammen mit der Geräte-ID und dem Verbrauchsdaten-Schlüssel zum Verschlüsseln der Funkdaten-Telegramme gespeichert oder mit diesem identisch sein, wobei der Verbrauchsdaten-Schlüssel zum Verschlüsseln zusammen mit der Geräte-ID bei Herstellung in das Endgerät eingeschrieben und in der Regel automatisiert in das IT-System des Verbrauchsabrechnungsdienstleisters übertragen wird. Eine automatisierte, gegen Diebstahl gesicherte elektronische Übertragung der Verschlüsselungs-Schlüssel vom Gerätehersteller in den Key-Store im IT-System des Verbrauchsabrechnungsdienstleisters ist nicht Teil der Erfindung und aus dem Stand der Technik bekannt, bspw. aus dem OMS Technical Report 03: XML Key Exchange Issue 1.0.2..

Die in dem Gebäude installierten Endgeräte erfassen Prozess-Daten (was auch das Bilden solcher Prozess-Daten bspw. aus vorliegenden Sensorwerten einschließt) Das Endgerät sendet mindestens ein Prozessdaten-Funktelegramm aus, wobei das Prozessdaten-Funktelegramm durch das Endgerät anonymisiert wird, indem keine das Prozessdaten-Funktelegramm dem Endgerät eindeutig zugeordnete Geräte-ID, sondern mindestens eine in dem Verbrauchsablesesystem (und damit auch einem Verbrauchsabrechnungssystem beim Verbrauchsabrechnungsdienstleister) nicht bekannte Anonymisierungs-ID aufweist, die zusammen mit der Geräte-ID in dem die Prozessdaten-Funktelegramme aussendenden Endgerät bekannt ist. Eine Korrelation von Geräte-ID und Anonymisierungs-ID ist ausschließlich in dem Endgerät möglich. In einem Energie-Effizienz-Modul (im Sinne einer logischen Einheit des Energie-Effizienz-Systems, in dem die Energieeinsparung realisiert wird) ist dagegen nur die Anonymisierungs-ID bekannt, nicht aber die Geräte-ID).

Verbrauchs-Datenwerte sind Datenwerte, die aus den aktuellen Messwerten von Sensoren der Endgeräte, wie bspw. Temperaturen (Heizkörper-Oberflächentemperatur, Raumlufttemperatur, Temperatur am Eingang des Heizkörpers, Temperatur am Ausgang des Heizkörpers), Ventilhubstellungen oder dgl. ermittelt bzw. gebildet werden. Diese Verbrauchs-Datenwerte (nachfolgend auch vereinfachend als Verbrauchsdaten bezeichnet) sind aus den Messwerten abgeleitete Datenwerte, die durch Umrechnung bspw. mit einem Umrechnungsfaktor (K-Faktor bei Heizkostenverteiler) ermittelt werden und/oder über eine bestimmte Messdauer akkumuliert bzw. integriert werden können, um den Verbrauch über die Zeit zu bilden.

In Abgrenzung dazu sind die Prozess-Datenwerte aktuelle Messwerte oder daraus abgeleitete Größen (wie bspw. aktuelle Temperatur, Volumina, Durchfluss, Leistungen oder spezielle Verbrauchswerte), die den aktuellen Zustand der Energieabgabe in dem Gebäude anzeigen. Diese Prozess-Datenwerte werden nachfolgend auch als "Prozess- oder Messwerte" bezeichnet. Diese Prozess- oder Messwerte werden häufig für Aufgaben der Energieeinsparung (Energie-Effizienz) verwendet, bspw. im Rahmen von Verfahren zur Verbesserung der Regelgüte und Energieeffizienz eines Energieerzeugers. Einrichtungen, die in dem später noch ausführlicher beschriebenen Verfahren auf Energieerzeuger einwirken, werden zusammenfassend als Energie-Effizienz-Modul bezeichnet.

In Funktelegrammen beinhaltete Datenwerte können auch Endgerätezustandsdaten beinhalten, wie Endgerätefehlerzustandsinformationen, Endgerätebatterieladungszustandsinformation und/oder Endgerätebetriebszustandsinformationen bzw. Alarmerkennungsinformation eines Rauchwarnmelders. Weitere im Griffbereich des Fachmanns liegende Datenwerte können in den Funktelegrammen enthalten sein.

Die in den verschiedenen Datentelegrammen (Verbrauchsdaten-Funktelegramm, Prozessdaten-Funktelegramm) übertragenen Datenwerte (auch als Dateninhalt oder Payload bezeichnet) werden in vielen Anwendungen also typischerweise verschieden sein. Grundsätzlich kann der Gegenstand der Erfindung aber auch dann verwirklicht sein, wenn der Dateninhalt (Payload) der verschiedenen Datentelegramme Verbrauchs-Datenwerte und Prozess-Datenwerte gleichzeitig enthält, bspw. weil die für ein Energiemonitoring benötigte Information (Datenwerte) in dem Dateninhalt des Verbrauchsdaten-Funktelegramms bereits enthalten ist.

Die Anonymisierungs-ID (zumindest als vollständige Anonymisierungs-ID) ist in dem Verbrauchsablesesystem erfindungsgemäß nur an einer Stelle gespeichert, d.h. mit andern Worten, dass sie an keinen anderen Ort als in dem Endgerät selbst gespeichert ist, ggf. auch dort nur temporär.

Dies hat den Vorteil, dass der in dem Prozessdaten-Funktelegramm enthaltenen Dateninhalt über die Anonymisierungs-ID zwar als von ein- und demselben Endgerät stammend identifiziert werden kann, eine inhaltliche Zuordnung zu einem bestimmten (in dem Verbrauchsablesesystem, einschließlich einem Verbrauchsabrechnungssystem, identifizierbaren) Endgerät aber nicht herstellbar ist, weil die Anonymisierungs-ID nicht logisch einem bestimmten Endgerät zuordenbar ist. Damit ist ein Rückverfolgen der in dem Prozessdaten-Funktelegramm enthaltenen Daten zu seinem Installationsort (bspw. in einer Wohnung) ausgeschlossen.

Da die (vollständige) Anonymisierungs-ID nur in dem jeweiligen Endgerät gespeichert ist, ist sie in den weiteren Kommunikationsteilnehmern in dem Verbrauchsablesesystem nicht bekannt und liegt insbesondere auch nicht in dem zentralen IT-System des Verbrauchsabrechnungsdienstleisters vor. Sie ist durch diesen also weder rückerstellbar noch beinflussbar, d.h. es handelt sich um eine echte Anonymisierung und nicht um eine Pseudo-Anonymisierung, die ggf. durch Maßnahmen in dem zentralen IT-System rückgängig gemacht werden könnte, bspw. im Falle eines unberechtigten Datenabgriffs in dem zentralen IT-System. Eine Zuordnung der Anonymisierungs-ID zu einem Endgerät (Geräte-ID bzw. Geräte-Funk-ID) über die Liegenschafts-Datenbankeinträge in den IT-Systemen des Abrechnungsdienstleisters zu dem konkreten Einbauort in einer Wohnung (Nutzeinheit) ist also prinzipiell unmöglich.

Gleichwohl sind die anonymisierten Daten in einem lokalen oder zentralen System zur energieeinsparenden Steuerung oder Regelung des beispielsweise Heizungssystems und/oder zum Energiemonitorring (also dem Energie-Effizienz-System) verwendbar, weil die Daten innerhalb des Energie-Effizienz-Systems als jeweils von einem der Liegenschaft bzw. der gebäudetechnischen Anlage zugehörigen Endgerät stammend identifizierbar sind und damit Veränderungen in dem Gesamtsystem zu Energieerzeugung und/oder Energieverbrauch ableitbar sind, die bspw. für Steuer-, Regel- oder Monitoring-Funktionen nutzbar sind.

Sofern die Anonymisierungs-ID bei Fertigung und/oder Inbetriebnahme ggf. zeitweise auch außerhalb des Endgeräts gespeichert wird, wird diese danach aber wieder gelöscht und ist nicht dauerhaft gespeichert. Dies wird auch so verstandenen, dass sie außerhalb des Endgeräts nicht bekannt ist, jedenfalls nicht in einer dem konkreten Endgerät zuordenbaren Weise. Die Daten sind nur als von einem Endgerät stammend zuordenbar. Eine solche temporäre Speicherung könnte ggf. in einem lokalen Speicher eines Servicegeräts erfolgen, der unmittelbar wieder überschrieben und/oder zu bestimmten Zeitpunkten automatisch gelöscht wird.

Ein erfindungsgemäß wichtiges Merkmal liegt also darin, dass bei der Anwendung des vorgeschlagenen Verfahrens die an diesem Verfahren teilnehmenden Endgeräte dazu eingerichtet werden bzw. sind, zusätzlich zu den Verbrauchsdaten-Funktelegrammen auch Prozessdaten-Funktelegramme auszusenden, die sich von den Verbrauchsdaten-Funktelegrammen zumindest durch das Merkmal unterscheiden, dass in den Verbrauchsdaten-Funktelegrammen die Geräte-ID übermittelt wird und dass in den Prozessdaten-Funktelegrammen die Geräte-ID nicht übermittelt wird, sondern (ggf. stattdessen) nur die Anonymisierungs-ID. Damit werden die in den anonymisierten Prozessdaten-Funktelegrammen als Datenwerte enthaltenen Verbrauchswerte- und/oder Prozessdaten (wie bspw. Temperaturwerte, Volumenwerte, Volumenstromwerte, Feuchtewerte, CO2-Werte, Hubstellungen, Leistungswerte, Verbrauchswerte etc.) anonymisiert. Diese Werte können bspw. für Energiemonitoring-Aufgaben, für Verfahren zur Verbesserung der Regelgüte und Energieeinsparung / Energieeffizienz bspw. einer Heizungsanlage oder dgl. verwendet werden.

Erfindungsgemäß zählen auch Endgeräte zu für die Durchführung des Verfahrens eingerichteten Endgeräten, bei denen die Funktion zur Aussendung von Prozessdaten-Funktelegrammen aktivierbar und/oder deaktivierbar ist. Das Aktivieren und Deaktivieren dieser Funktion kann bspw. bei der Inbetriebnahme des Geräts durch einen Servicetechniker vorgenommen werden.

Ein weiteres erfindungsgemäßes Merkmal liegt darin, dass das Prozessdaten-Funktelegramm von dem Endgerät mit einer Häufigkeit ausgesendet wird, die gegenüber der Häufigkeit der Aussendung der Verbrauchsdaten-Funktelegramme erhöht ist.

Für optimierte Energieeinsparverfahren in Energieeinspar-Systemen ist es wichtig, dass die Prozessdaten-Funktelegramme mit einer für die Optimierung notwendigen Häufigkeit ausgesendet werden, damit das Energieeinsparpotential auch sinnvoll ausgenutzt wird. Die konkrete Häufigkeit kann der Fachmann anhand der sich im konkreten Einzelfall ergebenden Notwendigkeiten geeignet festlegen. Vorteilhaft kann die Häufigkeit der Aussendung eine Aussendung alle 15 Minuten oder (zumindest) eine stündliche Aussendung sein. Aussendungen in einer solchen Häufigkeit geben in typischen Gebäudeanlagen typischerweise die Möglichkeit, ein Energieeinsparpotential zu erkennen und auszunutzen. Im Einzelfall kann der Fachmann hier aber auch, auf den jeweiligen Einzelfall abgestimmte Aussendehäufigkeiten auswählen.

Gemäß einer besonders bevorzugten Variante des erfindungsgemäß vorgeschlagenen Verfahrens wird die Anonymisierungs-ID in dem Endgerät erzeugt und gespeichert. Entsprechend dieser Ausführungsform kann das Endgerät insbesondere zumindest die Teile der Anonymisierungs-ID, die nicht zur Zuordnung des Endgeräts zu einer Liegenschaft oder Anlage dienen, mit einem eigenen Zufallsgenerator erzeugen, ohne dass die Anonymisierungs-ID (in ihrer Gesamtheit, d.h. mit dieser zufällig erzeugten Kennung, in irgendeinem anderen Gerät gespeichert wird. Dies ist besonders vorteilhaft, weil damit die Anonymisierungs-ID außerhalb des Endgeräts erst gar nicht in Verbindung zur Endgerät-ID gebracht werden kann. Die Anonymisierungs-ID oder die zufällige Kennung als Teil der Anonymisierungs-ID können insbesondere bei der Inbetriebnahme, aber auch bei der Herstellung des Endgeräts, erzeugt werden.

Ein in dem Endgerät ausgebildeter Zufallsgenerators kann die Anonymisierungs-ID bspw. bei dem ersten Einschalten eines in dem Endgerät verbauten Prozessors, bei dem Durchführen einer Inbetriebnahme-Routine oder dgl. erzeugen. In diesem Zufallsgenerator kann bspw. eine Zeitinformation umfassend Jahr, Monat, Tag, Stunde, Tagesminute (im Sinne der seit Tagesbeginn gezählten Minuten), Tagessekunde (im Sinne der seit Tagebeginn gezählten Sekunden) und/oder Millisekunde zum Erzeugen einer zufälligen Anonymisierungs-ID verwendet werden. Vorzugsweise werden insbesondere (auch) die Zeitinformationen, die sich in kurzen zeitlichen Abständen ändern, wie die Tagesminute, die die Tagessekunde und die Millisekunde, bei der Erstellung der Anonymisierungs-ID durch den Zufallsgenerator mitverwendet. Ggf. können zusätzlich weitere Informationen zum Erzeugen der Anonymisierungs-ID (mit) verwendet.

In diesem Sinne kann im Zufallsgenerator erfindungsgemäß die Zeitinformation (Echtzeit oder Systemzeit) des Endgeräts zur Erzeugung der Anonymisierungs-ID herangezogen werden, die in den Endgeräten zur Verfügung steht. Da in Endgeräten meist ein kostengünstiger und nicht hochpräziser Uhrenquarz verwendet wird, besitzt jedes Endgerät eine individuelle zeitliche Abweichung der Endgeräte-Uhrzeit gegenüber der tatsächlichen Lokalzeit und folglich eine individuelle Zeit.

Daher ist von außen die Zufallsvariation nicht rückberechenbar, insbesondere dann nicht, wenn das Endgerät seine Uhrzeit nicht vollständig (ohne Sekunden oder Millisekunden) oder gar nicht in seinem Prozessdaten-Funktelegramm überträgt.

Hierdurch wird sichergestellt, dass auch bspw. am selben Tag hergestellte und/oder in Betrieb genommene Endgeräte eine verschiedenen Anonymisierungs-ID aufweisen, weil das Erzeugen der Anonymisierungs-ID bei Herstellung oder Inbetriebnahme mit hinreichender Wahrscheinlichkeit nicht mit denselben Zeitinformationen erfolgt.

Gemäß einer weiteren möglichen Ausgestaltung kann eine unterschiedliche Anonymisierungs-ID für verschiedene Endgeräte auch dadurch erreicht werden, dass zusätzlich Teile der für das Gerät einmalig vergebene Geräte-ID mit in die Berechnung der Anonymisierungs-ID eingehen. Anstelle der Teile der Geräte-ID kann auch eine weitere, bei der Herstellung einmalig vergebene Zahl in jedem Endgerät gespeichert sein und bei der Erstellung der Anonymisierungs-ID verwendet werden. In diesem Fall unterscheiden sich auch Anonymisierungs-IDs von Endgeräten, die zufälliger Weise dieselbe Zeitinformation nutzen.

Besonders bevorzugt kann das Endgerät die Anonymisierungs-ID automatisch während der Inbetriebnahme des Endgeräts erzeugen, bei der die Information zum Gebäude, zur Liegenschaft oder zur Energieerzeugungsanlage, beispielsweise einer Heizungsanlage, durch das Servicegerät zum Endgerät übertragen wird, das Endgerät aber die Anonymisierungs-ID nicht an das Servicegerät überträgt und auch nicht durch das Service-Gerät auslesbar ist.

Im Falle einer Kombination von Verbrauchserfassungs- bzw. Sensorgerät und zugewiesener Datensammelrichtung, die jeweils zusammen ein Endgerät bilden, kann eine Datensammeleinrichtung (bei mehreren zugewiesenen Verbrauchserfassungs- bzw. Sensorgeräten) auch Bestandteil mehrerer Endgeräte sein. Grundsätzlich kann in diesem Fall jedem Verbrauchserfassungs- bzw. Sensorgerät eine Anonymisierungs-ID fest zugewiesen werden, wie vorstehenden für das Endgerät beschrieben, die dann durch die Datensammeleinrichtung jeweils für diese Kombination von Verbrauchserfassungs- bzw. Sensorgerät und Datensammeleinrichtung übernommen wird. Jede Kombination der einen Datensammeleinrichtung mit jeweils einem der dieser insgesamt zugewiesenen Endgeräte (Verbrauchserfassungs- oder Sensorgerät) können dann jeweils eine eigene Anonymisierungs-ID aufweisen.

Es ist aber auch denkbar, dass die Datensammeleinrichtung selbst eine ihr eigene oder mehrere (bspw. entsprechend der maximalen Anzahl der zuweisbaren Verbrauchserfassungs- oder Sensorgeräte) Anonymisierungs-IDs enthält, die ggf. mit der Anonymisierungs-ID und/oder Geräte-ID eines Verbrauchserfassungs- oder Sensorgeräte zu einer Anonymisierungs-ID für jedes Endgerät verbunden wird.

Durch die vorbeschriebenen Maßnahmen ist die Wahrscheinlichkeit, dass innerhalb einer Anlage (Liegenschaft in demselben lokalen Funknetz) eine Anonymisierungs-ID doppelt oder mehrfach erzeugt wird, sehr gering. In der Regel sollte keine Autorisierungs-ID innerhalb des Funkempfangsbereichs, der einem Energiemonitoring- und/oder Energieeffizienz-System zugeordnet ist, doppelt oder mehrfach vorhanden sein, um eine störungsfreie Verarbeitung der Prozessdaten-Funktelegramme zu ermöglichen. Auch sollen Endgeräte, die in Gebäuden in der Nachbarschaft installiert sind und die nicht einem Energiemonitoring und/oder Energieeinspar- bzw. Energieeffizienz- Systems zugeordnet sind, nicht mit in die Verarbeitung einfließen.

Sollte es trotz der äußert geringen Wahrscheinlichkeit zu Dopplungen der Anonymisierungs-ID in dem lokalen Energiemonitoring- und/oder Energieeffizienz-System kommen, kann dies in einem robust ausgelegten Energieeffizienz-System das Energieeffizienz-Verfahren nicht signifikant stören.

Wenn die Anonymisierungs-ID nicht unmittelbar in dem Endgerät (bspw. durch einen Zufallsgenerator) erzeugt wird, kann erfindungsgemäß vorgesehen werden, dass die Anonymisierungs-ID dynamisch durch das Endgerät variiert wird, bspw. durch eine Variation mit einer Zufallszahl und/oder einer Zeitinformation (bspw. der Zeitpunkt der dynamischen Variation) und/oder mit einer eindeutigen Geräteinformation, bspw. die Geräte-ID, die in die Berechnung mit eingeht. Ein Rückschluss auf die vollständige Geräte-ID ist nicht möglich, weil die Geräte-ID zusammen mit anderen, zufällig ausgewählten und nicht nachvollziehbaren Größen in die Erzeugung der Anonymisierungs-ID eingeht.

Nach einer Ausführungsform wird vorgeschlagen, dass die Anonymisierungs-ID die Geräte-ID im Endgeräte Funktelegramm ersetzt und dadurch das Funktelegramm anonymisiert wird. In dem Prozessdaten-Funktelegramm wird anstelle der Geräte-ID also die Anonymisierung-ID verwendet.

Erfindungsgemäß weistdie Anonymisierungs-ID einen nicht zufällig erzeugten Teil auf, der eine Zuordnung der durch das Endgerät ausgesendeten Prozessdaten-Funktelegramme zu einer energetischen Einheit des Energie-Effizienz-Systems, insbesondere einer Liegenschaft und/oder Heizungsanlage, ermöglicht. Mit anderen Worten wird als ein Teil der Anonymisierungs-ID eine nicht zufällig erzeugte Kennung verwendet, die eine Zuordnung zu einer energetischen Einheit des Energie-Effizienz-Systems ermöglicht. Als energetische Einheit des EnergieEffizienz-Systems wird also eine Einheit, wie eine Liegenschaft oder eine energetische Anlage (Heizungsanlage, Kühlanlage oder dgl.) verstanden, deren energetisches Verhalten optimiert werden soll. Gleichzeitig enthält die Anonymisierungs-ID gemäß einer besonders bevorzugten Ausführungsform den zufällig erzeugten Teil der Kennung, der nur dem Endgerät bekannt ist und somit eine ausreichende Anonymisierung sichert.

Wenn gemäß einer im Vorfeld beschriebenen Ausführungsform nur die Geräte-ID ersetzt wird, kann die Telegrammstruktur und die Data-Record-Struktur der Payload-Daten (Messwerte, Sensorwerte) unverändert bleiben. Ggf. können sogar die Payload-Daten unverändert übernommen werden, auch wenn das Prozessdaten-Funktelegramm in der Regel andere Verbrauchsdaten aufweisen wird. In dieser Ausführungsform ist es allerdings erforderlich, dass die Anonymisierungs-ID so gestaltet wird, dass es einem Funkempfänger, bspw. einem lokal installierter Datensammler, möglich ist, das Prozessdaten-Funktelegramm einem zu der Liegenschaft zugehörigen Endgerät zuzuordnen und dabei keine Information zu beinhalten, die eine genaue Zuordnung des Prozessdaten-Funktelegramms zu dem Einbauort des Endgeräts (Senders) in der Liegenschaft insbesondere zu einer Nutzeinheit ermöglicht. Dies kann insbesondere durch das Erzeugen einer Anonymisierungs-ID, die eine Zuordnung zu einer Liegenschaft ermöglicht ohne eine Zuordnung zu einem Einbauort zu ermöglichen, vorzugsweise bei der Inbetriebnahme des Endgeräts, bei der die Information zum Gebäude, zur Liegenschaft oder zur Energieerzeugungsanlage, beispielsweise einer Heizungsanlage, durch das Servicegerät zum Endgerät übertragen wird, sichergestellt werden.

Das Prozessdaten-Funktelegramm kann auch als ein normkonformes Telegramm (bspw. der OMS-Spezifikation Vol.2:Primärkommunikation 4.2.1) ausgesendet werden, das strukturell nicht von anderen Funktelegrammen des Endgeräts unterscheidbar ist und daher im Funkempfänger der Datensammeleinrichtung nicht anders behandelt werden muss. Ein wesentlicher Vorteil ist hierbei, dass die Endgeräte lediglich mit einer anderen Funkadresse (als Teil des Funktelegramm-Headers) senden, in der die Anonymisierungs-ID die Geräte-ID ersetzt und die weiteren Teile der Funkadresse bzw. des Headers ggf. sogar vollständig unverändert beibehalten werden können. Die Erstellung des Funktelegramms im Endgerät (bspw. durch eine im Prozessor des Endgeräts implementierte Software) kann also mit einem Telegrammaufbau identisch zum Verbrauchsdatentelegramm erfolgen, so dass die Software zum Erzeugen der Prozessdaten-Funktelegramme im Endgerät sehr einfach gehalten werden kann. Der Dateninhalt (Payload bzw. Datenwerte) der Verbrauchsdaten-Funktelegramme und der Prozessdaten-Funktelegramme wird sich üblicherweise unterscheiden, könnte im Rahmen der Erfindung aber auch identisch gewählt werden. Die Payload, d.h. die Nutzdaten bzw. Datenwerte, können in dafür vorgesehenen Bereichen (Blöcken des Funktelegramms) entsprechend der Anwendung (Energiemonitoring, Energieeffizienz-Verfahren, Verbrauchserfassung) eingefügt sein.

Vorteilhaft zur Anonymisierung ist beispielsweise auch die Nutzung des Kennzeichnungsschemas gemäß DIN 43863-5 "Herstellerübergreifender Identifikationsnummer für Messeinrichtungen". So kann anstelle der Geräte-ID die Anonymisierungs-ID und anstelle des Hersteller-Codes eine ggf. Anonymisierungskennung treten, die später noch genauer erläutert wird. Dies ermöglicht besonders einfache Softwaremodule in den Endgeräten, da auch hier eine nahezu identische Programmstruktur (Software-Modul) zur Erzeugung der anonymisierten und nicht anonymisierten Funktelegramme verwendet werden kann.

In einer besonders vorteilhaften Ausführungsform kann vorgesehen sein, dass das Prozessdaten-Funktelegramm zusätzlich zu der Anonymisierungs-ID eine Anonymisierungs-Kennung aufweist, die das Funktelegramm als "anonymisiert" kennzeichnet. Die (gesonderte) Anonymisierungs-Kennung dient dazu, ein Funktelegramm, insbesondere ein Funktelegramm, das bspw. konform zur OMS-Spezifikation (siehe www.oms-group.org; Open Metering System Specification Volume 2 Primary Communication Issue 4.2.1 / 2019-11-23) kodiert wurde, als "anonymisierte Daten beinhaltend" zu kennzeichnen (d.h. als "anonymisiertes Funktelegramm", das in diesem Text auch als Prozessdaten-Funktelegramm bezeichnet wird. Das Prozessdaten-Funktelegramm ist also auch ein "anonymisiertes Funktelegramm" im vorbeschriebenen Sinne.).

Durch eine (integrierte oder zusätzliche) Anonymisierungs-Kennung kann eine Empfangseinrichtung also frühzeitig erkennen, dass ein Funktelegramm nicht zu verarbeiten (also bspw. zu empfangen) ist und das noch unvollständig empfangene Funktelegramm zu einem sehr frühen Empfangszeitpunkt verwerfen bzw. den Funkempfang abbrechen. Dies ermöglicht, dass eine batteriebetriebene Empfangseinrichtung stromsparend betrieben werden kann. Ein auf ein Funktelegramm des Telegrammtyps "anonymisiertes Funktelegramm" wartender Empfänger kann dagegen des empfangene Funktelegramm unmittelbar weiterverarbeiten (bspw. auswerten oder an eine entsprechendes Gerät, wie eine EnergieEffizienz-Modul, weiterleiten) und Funktelegramme entsprechend verwerfen oder den Regeln entsprechend verarbeiten.

Als sehr einfach gestaltete Anonymisierungs-ID kann bspw. eine zufällige 4-Byte-Zahl (BCD-Kodiert = 00000001 ... 99999999) erzeugt werden. Die Anonymisierungs-ID ist in diesem Fall, ebenso wie die nicht anonymisierte Geräte-ID in Funktelegrammen gemäß OMS Spezifikation, ein 8-stelliger BCD-Zahl, so dass sie anstelle der Geräte-ID im Telegramm verwendet werden kann. Die Wahrscheinlichkeit von zufälligen Dopplungen der Anonymisierungs-ID innerhalb eines Wohngebäudes ist durch die deutlich geringere Anzahl von in dem Gebäude installierten Endgeräten im Vergleich zum Wertebereich der zufällig erzeugten 8-stelligen BCD-Zahl sehr gering. Durch eine Hexadezimal-Kodierung der Anonymisierungs-ID kann die Anzahl von Anonymisierungs-IDs erfindungsgemäß sogar noch weiter vergrößert und damit die Kollisionswahrscheinlichkeit verkleinert werden.

Weitere Varianten der Anonymisierungs-Kennung und/oder der Anonymisierungs-ID in einem Prozessdaten-Funktelegramm können abhängig von der Endgeräteart (bspw. Zähler oder Sensor) oder dem Gerätetyp (bspw. Versionsstand, wie Version 1 oder Version 2) erzeugt werden. Hierdurch lassen sich zusätzlich Informationen aus der Anonymisierungs-Kennung und/oder der Anonymisierungs-ID ablesen.

Zur Verbesserung des Verfahrens kann zusätzlich vorgesehen werden, dass ein Prozessdaten-Funktelegramm ausschließlich oder zusätzlich Ordnungsbegriffe des Verbrauchsabrechnungsdienstleisters, wie eine Heizungs- oder Kälte-Anlagen-Kennung (Anlagenkennung) und/oder eine Liegenschafts-Kennung, aufweist. Damit wird die Zuordnung der Datenwerte aus dem Prozessdaten-Funktelegramm in einer entfernten Datenverarbeitungseinrichtung, bspw. einem IT-System oder einem IoT-Cloud-System, zu einer Liegenschaft oder einer gebäudetechnischen Anlage ermöglicht, ohne dass eine Zuordnung der anonymisierten Daten zu den einzelnen Wohnungen der Liegenschaft möglich ist.

Die Liegenschafts-Kennung und/oder die Anlagen-Kennung können bspw. in den Bereich des Funktelegramms aufgenommen sein, in dem die Nutzdaten (Payload) übertragen werden. Werden diese Informationen nur im Rahmen eines Energiemonitoring ausgewertet, ermöglicht dies, wie später noch beschrieben, auch die Prozessdaten-Funktelegramme mit verschlüsselten Payload-Daten zu übertragen und somit die Liegenschafts-Kennung und die Anlagen-Kennung (soweit vorhanden) gegen einfaches Mitlesen in den Funktelegramme zu schützen.

Mit der Liegenschafts-Kennung und/oder der Anlagen-Kennung ist ein Energiemonitoring mit den anonymisierten Prozessdaten auch in der entfernten Datenverarbeitungseinrichtung eines Dienstleisters möglich, wobei durch die Anonymisierung der Prozessdaten einerseits kein Rückschluss auf den Installationsort und - mit Zusatzinformationen aus den Abrechnungssystemen - auf den Nutzer/ Bewohner möglich ist und trotzdem ein (technisch notwendiger) Bezug zu einer Anlagen, insbesondere einer Heizungs-Anlage, erreicht wird.

Die Anlagen-Kennung kann zusätzliche Ordnungsdaten als Merkmale der gebäudetechnischen Anlage enthalten. Die Anlagen-Kennung kann in diesem Sinne mindestens eine der Informationen enthalten:
- Bezeichnung der Versorgungsanlage, insbesondere Kühl- oder Heizungsanlage, Nahwärme-Heizkraftwerk, Blockheizkraftwerk oder dgl.
- Nummer oder Bezeichnung des Versorgungsstranges, insbesondere des Kühloder des Heizungsstrangs oder des Kühl- oder Heizkreises im Gebäude bzw. im Kühl- oder Heizungssystem
- Etageninformation (kann bspw. nur bei mehr als 4 Nutzeinheiten auf einer Etage eingefügt werden, damit die Zuordenbarkeit zu einer Wohnung nicht anhand der Etagenbezeichnung möglich ist)

Diese zusätzlichen Angaben (Ordnungsdaten) als Teil der Anlagen-Kennung können für eine Vereinfachung in einer statistischen Auswertung verwendet werden.

Die Liegenschafts-Kennung kann in einfacher Weise Ordnungsdaten (wie eine Liegenschaftsnummer / Abrechnungsnummer) oder auch Ortsdaten (wie die Adresse der Liegenschaft) oder Geokoordinaten des Gebäudes, der Liegenschaft (mehrere Gebäude) oder Ordnungsdaten und/oder Ortsdaten der Versorgungsanlage oder Heizungsanlage (bspw. eines Nahwärme-Kraftwerks) beinhalten, wodurch zufällig gleiche Anonymisierungs-IDs aus unterschiedlichen Liegenschaften auch in einer zentralen Datenverarbeitungseinrichtung zuverlässig getrennt werden können.

Die Anlagen-Kennung und/oder die Liegenschafts-Kennung können in lesbarer Form, verschlüsselt oder/oder in eine Kodierung übersetzt vorgesehen werden. Die Verschlüsselung und/oder Kodierung müssen nur in der Datenverarbeitungseinrichtung bekannt sein, welche die Prozessdatentelegramme auswertet, bspw. einem Energiemonitoring-System eines Dienstleisters oder einem lokal in der Liegenschaft installiertem Energie-Effizienz-Modul als Teil des Energieeinsparsystems (Energie-Effizienz-Systems).

In einem lokalen Funkkommunikationsbereich, d.h. bei der Funkkommunikation von einem das Prozessdaten-Funktelegramm erzeugenden Endgerät zu einer lokalen stationären Datenempfangseinrichtung bzw. Datensammeleinrichtung (wie bspw. Datensammler, Regelgeräte einer Versorgungs- oder Heizungsanlage oder auch einem Router), ist es in der Regel erfindungsgemäß ausreichend, die Anonymisierungs-ID sowie ggf. die Anonymisierungs-Kennung in das Prozessdaten-Funktelegramm aufzunehmen. In einem eng begrenzten lokalen Raum, der durch die Funkreichweite des Funksenders des Endgerätes (Short Range Device; Sendeleistung des Funksenders entsprechend den Vorgaben der DIN EN 13757-4) begrenzt ist, sind in der Regel keine weiteren Kennungen notwendig, sofern die Daten durch die Anonymisierungs-ID / die Anonymisierungs-Kennung einer Anlage oder einem Anlagenteil zugeordnet werden können.

Sofern eine solche einfache Zuordnung nicht ausreicht, bspw. weil eine Anlage nicht unterscheidbare Anlagenteile (wie bspw. mehrere Heizkreise) aufweist oder die lokale Datensammeleinrichtung die empfangenen Prozessdaten-Funktelegramme auch an in benachbarten Liegenschaften installierte lokale Datensammeleinrichtungen oder direkt an Energie-Effizienz-Module weiterleitet, kann zumindest die Anlagen-Kennung im Prozessdaten-Funktelegramm aufgenommen werden. Das Einfügen solcher Ordnungsdaten der Anlage kann durch das Endgerät oder auch durch eine das Prozessdaten-Funktelegramm wieder aussendende Datensammeleinrichtung erfolgen.

Sofern das Prozessdaten-Funktelegramm erfindungsgemäß an die zentrale Datenverarbeitungseinrichtung mittels Datenfernübertragung weitergeleitet wird, wird vorzugsweise eine, ggf. sogar weltweit eindeutige, Liegenschafts-Kennung mit in das Prozessdaten-Funktelegramm aufgenommen sein. Im Zusammenhang mit einer solchen Liegenschafts-Kennung wird eine - im lokalen Bereich bereits mit ausreichender Wahrscheinlichkeit ausreichend eindeutige - Anonymisierungs-ID auch global ausreichend eindeutig. Zusammen mit der Liegenschafts-kennung wird die Anonymisierungs-ID daher erfindungsgemäß auch als globale Anonymisierungs-ID bezeichnet.

Durch die Anonymisierung der Prozessdaten-Funktelegramme wird erreicht, dass kein in einem Prozessdaten-Funktelegramm ausgesendeter Datenwert, der als personenbezogene Daten im Sinne der EU-DSGVO angesehen werden könnte, einem Einbauort d.h. einer Nutzeinheit in der Liegenschaft zugeordnet werden kann. Daher können in einer ersten sehr einfachen Ausführungsform die Prozessdaten-Funktelegramme unverschlüsselt übertragen werden, da es sich bei den Prozessdaten auch nicht grundsätzlich um vertrauliche Daten handeln muss, so dass zur Verfahrensvereinfachung auf ein die Datensicherheit erhöhendes Verschlüsselungsverfahren verzichtet werden kann. Dadurch können die in den Prozessdaten-Funktelegrammen enthaltenen Datenwerte von den empfangenden Geräten, insbesondere den lokalen Datensammeleinrichtungen, ohne die Notwendigkeit der Entschlüsselung und daher ohne lokale Speicherung der hierfür erforderlichen Schlüssel oder ohne Internet- oder Mobilfunk-Zugriff auf den "Key-Store" zum Download oder zur Online-Abfrage der für die Entschlüsselung der Prozessdaten erforderlichen Schlüssel dekodiert und weiterverarbeitet werden. Dies ist bspw. für ein lokales Energiemonitoring oder auch für eine lokale optimierende Steuerung von Heizungs- oder Kühlanlagen vorteilhaft, in denen Regelgeräte der Heizungs- oder Kühlanlagen Datenwerte aus der Verbrauchsdatenerfassung auswerten, um die Heizungsanlage besonders energieeffektiv zu betreiben.

Erfindungsgemäß kann das gemeinsame Funknetz des Verbrauchsablesesystems und des Energiemonitoring-Systems sowohl ein lokales Funknetz (bspw. ein proprietäres Funknetz oder ein WLAN-Funknetz) oder ein Weitbereichs-Funknetz (WAN, bspw. ein Mobilfunknetz) sein.

Ziel der Fernablesung bei der Verbrauchsablesung (AMR) ist es grundsätzlich, die durch die Endgeräte erfassten Verbrauchsdaten automatisiert an ein zentrales IT-System eines Verbrauchabrechnungsdienstleisters zu senden, das eine (von den Endgeräten entfernte) Datenverarbeitungseinrichtung darstellt. Das zentrale IT-System kann einen zentralen Server und/oder Cloud-Anwendungen umfassen.

Es gibt unterschiedliche Kommunikationswege, über die das erfindungsgemäß Verfahren realisiert werden kann.

Eine von mehreren Möglichkeiten sieht vor, dass die von den Endgeräten in ein lokales Funknetz ausgesandten Funktelegramme, d.h. die Verbrauchsdaten-Funktelegramme und die Prozessdaten-Funktelegramme, zunächst von lokalen Datensammeleinrichtungen empfangen werden. Die Datensammeleinrichtungen verfügen neben der Schnittstelle zu dem lokalen Funknetz auch über eine Schnittstelle zu einem Weitbereichs-Funknetz, bspw. einem Mobilfunk-Netzwerk, über das die Funktelegramme dann an das zentrale IT-System weitergeleitet werden. Die verschlüsselten Verbrauchsdatentelegramme, die zumindest mit dem Verbrauchsdaten-Schlüssel in dem Endgerät verschlüsselte Payload-Daten aufweisen, werden als verschlüsselte Verbrauchsdaten-Funktelegramme weitergeleitet. Die Datensammeleinrichtung sind erfindungsgemäß nicht dazu eingerichtet, die verschlüsselten Verbrauchdaten-Funktelegramme zu entschlüsseln, weil die Verbrauchsdaten-Schlüssel zum Entschlüsseln der Verbrauchsdaten-Funktelegramme nicht in den Datensammeleinrichtungen vorliegen. Auch die Prozessdaten-Funktelegramme können über das Weitbereichs-Funknetz an das zentrale IT-System oder eine zentrale Energiemonitoring-Anwendung übertragen werden. Die Datensammeleinrichtung kann dazu eingerichtet sein, die verschlüsselten Prozessdaten-Funktelegramme zu entschlüsseln, um die Prozessdaten aufzubereiten oder zu verarbeiten, damit sie an eine zentrale oder lokale Energiemonitoring-Anwendung gesendet werden können. In diesem Fall ist sicherzustellen, dass die Verschlüsselung der Prozessdaten-Funktelegramminhalte in dem Endgerät nicht mit dem Verbrauchsdaten-Schlüssel erfolgt, damit der Verbrauchsdatenschlüssel nicht in der Datensammeleinrichtung vorliegt. Grundsätzlich können die in das lokale Funknetz ausgesandten Prozessdaten-Funktelegramme aber auch ohne Aufbereitung an eine lokale Energiemonitoring-Anwendung gesendet bzw. direkt von dieser empfangen werden.

In einer Energiemonitoring-Anwendung können - neben anderen Auswertungen oder Anwendungen - Energiemonitoring-Verfahren oder auch Energieeinspar-bzw. Energieeffizienz-Verfahren durchgeführt werden, die die Datenwerte der Endgeräte als Prozesswerte (Prozess-Eingangsgrößen) der Versorgungstechnik oder Heizungstechnik verwenden. Sie benötigen, anders als bspw. Wärme- oder Wasserverbrauchsabrechnungs-Systeme, die aktuellen Datenwerte wesentlich häufiger und auch möglichst zeitnah nach der Messung / Erfassung des Datenwerts, um auf Änderungen bspw. im Heizungssystem oder sich ändernde Wetterverhältnisse (Außentemperatur, Wind, Sonne) schnell reagieren zu können. Nur so ist eine effiziente Überwachung des Versorgungssystems oder die energetische Optimierung des Versorgungssystems, wie etwa des Raumheizungssystems, des Raumkühlsystems oder der Warmwassererzeugung, sichergestellt, bzw. die Energieeinsparung ist nur dann maximal.

Systeme zur Überwachung oder Optimierung der Heizungshydraulik bzw. der Warmwasserbereitung sind ebenfalls Systeme zur Steigerung der Energieeffizienz und damit zur Energieeinsparung (also Energie-Effizienz-Systeme im Sinne der Erfindung). Alle Regelungs- und Steuerungssysteme, die Datenwerte (Messwerte, korrigierte Messwerte, errechnete Größen) von in Liegenschaften installierten Verbrauchserfassungsgeräten aufzeichnen und/oder verarbeiten können, können als Teil eines Energiemonitoring-Systems und/oder eines Energieeinspar-Systems betrieben werden.

Eine weitere Möglichkeit für einen von dem Endgerät ausgehenden Kommunikationsweg liegt darin, dass das Endgerät selbst über eine Schnittstelle zu dem Weitbereichs-Funknetz (WAN) verfügt, bspw. durch eine integrierte Mobilfunkschnittstelle. Hierüber können die Endgeräte direkt mit einem zentralen Server oder einer Cloud-Anwendung des Verbrauchsablesesystems kommunizieren, das auch ein Verbrauchsabrechnungssystem umfasst oder umfassen kann. Dies kann bspw. im Rahmen einer IoT-Funktionalität (Internet-of-Things) erfolgen. In diesem Fall werden die Verbrauchsdaten-Funktelegramme und die Prozessdaten-Funktelegramme direkt an eine entfernte Datenverarbeitungseinrichtung bspw. über eine IoT-Cloud übertragen, in der bspw. auch eine zentrale Energiemonitoring-Anwendung in dem vorbeschrieben Sinne realisiert sein kann. Ggf. kann die zentrale Energiemonitoring-Anwendung über das WAN, bspw. im Sinne einer Internet-of-Things-Anwendung, mit einem lokalen Energieeinspar-System, bspw. einem Energie-Effizienz-Modul, das eine Heizungsanlagen-Steuerung oder -Regelung beeinflussen kann, kommunizieren.

Die vorstehenden Möglichkeiten oder weitere dem Fachmann bekannte Kommunikationswege können entsprechend bei der Umsetzung der vorliegenden Erfindung auch kombiniert werden.

Eine weitere Ausführungsform kann erfindungsgemäß vorsehen, dass das Endgerät die Verbrauchsdaten-Funktelegramme nach einem ersten Sendeschema (Verbrauchsdaten-Sendeschema) sendet, mit dem der Sendezeitpunkt und/oder die Sendeleistung und/oder die Trägerfrequenz und/oder die Modulationsart (Kanalkodierung) der durch das Endgerät ausgesandten Verbrauchsdaten-Funktelegramme festgelegt werden, und dass das Endgerät die Prozessdaten-Funktelegramme nach einem zweiten Sendeschema (Prozessdaten-Sendeschema) sendet, mit dem die Sendezeit und/oder die Sendeleistung und/oder die Trägerfrequenz und/oder die Modulationsart (Kanalkodierung) der durch das Endgerät ausgesandten Prozessdaten-Funktelegramme festgelegt werden. Erfindungsgemäß unterscheiden sich das erste und das zweite Sendeschema bei dieser Ausführungsform zumindest in einem der Parameter Sendezeitpunkt, Sendeleistung, Trägerfrequenz und/oder Modulationsart (Kanalkodierung).

Durch eine durch das Endgerät gesteuerte Variation der Sendeleistung beim Aussenden der Verbrauchsdaten-Funktelegrame und Prozessdaten-Funktelegramm und/oder durch eine andere Taktung (Häufigkeit) der beiden ausgesendeten Funktelegrammtypen (bspw. 10 x Prozessdaten-Funktelegramm und 1 x Verbrauchsdaten-Funktelegramm in demselben Zeitraum) kann erreicht werden, dass keine Lokalisierung (Ortsbestimmung) der Quelle eines Prozessdaten-Funktelegramms (d.h. das entsprechende Endgerät) durch Speicherung und Auswertung aller RSSI-Empfangspegel und Korrelation der RSSI-Empfangspegel von Prozessdaten-Funktelegrammen (mit unverschlüsselter Anonymisierungs-ID im Funktelegramm-Header) mit den RSSI-Werten von Verbrauchsdaten-Funktelegrammen (mit unverschlüsselter Geräte-ID im Funktelegramm-Header) möglich ist (Abhören der Funkverbindungen).

Selbst beim Aufzeichnen der RSSI-Werte über einen längeren Zeitraum, beispielsweise in der Datensammeleinrichtung oder einem Abhörgerät zum Aufzeichnen von Funktelegrammen der Endgeräte, ergibt sich so kein einfach nachvollziehbares Muster bei den RSSI-Werten, durch das eine eindeutige und zuverlässige Lokalisierung / Positionsbestimmung des Endgerätes und damit eine Rückverfolgung (im Sinne eines Auflösens der Anonymisierung) mit vertretbarem technischen Aufwand möglich ist. Die weiteren, ohnehin und zufällig auftretenden Einflüsse auf die RSSI-Pegel bei einer Funkübertragung, insbesondere eine Funkstreckenqualitätsänderung durch bspw. Öffnen / Schließen von Türen und Fenstern, die Anwesenheit von Personen im Raum usw., erschweren eine Positionsbestimmung über den RSSI-Wert zusätzlich.

In einer weiteren Variante des erfindungsgemäßen Verfahrens können die Sendeschemata, insbesondere das zweite Sendeschema, stochastisch variiert (randomisiert) werden, bspw. indem eine über einen Zufallszahlengenerator erzeugte Variation mindestens eines der Parameter Sendezeit, Sendeleistung, Trägerfrequenz oder Modulation erfolgt, wobei dieses auch eine pseudozufällige Variation sein kann. Besonders bevorzugt werden mehr als zwei oder auch alle Parameter zufällig variiert.

Durch die Randomisierung wird es zusätzlich erschwert, eine Korrelation zwischen den Verbrauchsdaten-Funktelegrammen mit der Geräte-ID und den Prozessdaten-Funktelegrammen desselben Endgeräts mit der Anonymisierungs-ID herzustellen. Die Korrelation über die Analyse der Empfangsfeldstärke (RSSI-Wert) wird so zuverlässig verhindert.

Ein wichtiger Aspekt der gemäß einer besonders bevorzugten Ausführungsform vorgeschlagenen Randomisierung liegt darin, dass die nicht anonymisierten Verbrauchsdaten-Funktelegramme und die anonymisierten Prozessdaten-Funktelegramme sich durch technische Parameter aufgrund zufälliger Variationen voneinander unterscheiden und daher nicht (zumindest nicht mit vertretbarem technischen Aufwand) miteinander in Verbindung gebracht werden können. Durch die zufällige Variation der Sendezeit besteht kein zeitlich fester Sende-Abstand zwischen den Verbrauchsdaten-Funktelegrammen und den Prozessdaten-Funktelegrammen. Zusätzlich kann die Sendehäufigkeit der verschiedenen Funktelegrammtypen (Taktung) und auch die Sendeleistung unabhängig voneinander eingestellt und zufällig variiert werden. Eine weitere Möglichkeit ist die Verschiebung der Modulationsfrequenz mittels bspw. Frequency Shift Keying (FSK-Verfahren) oder Gaussian Frequency Shift Keying (GFSK-Verfahren), wobei eine Verschiebung der Modulationsfrequenz nur abgestimmt auf den im Endgerät verwendeten Funksender (Hardware) und den im Empfänger verwendeten Empfänger (Hardware) möglich ist, weil technisch berücksichtigt werden muss, dass Sender und Empfänger technisch zur Kommunikation in der Lage sind.

Bei der zufälligen Variation der Sendezeit des Sendeschemas für die Prozessdaten-Funktelegramme gegenüber dem Sendezeitschema für die Verbrauchsdaten-Funktelegramme können erfindungsgemäß systematische Einflüsse, bspw. basierend auf thermischen Effekten, einfließen. Das Erzeugen einer zufälligen Variation kann sehr einfach beispielsweise mittels Messung der Endgeräte-Umgebungstemperatur oder der Endgeräte-Temperatur und einem Algorithmus zur Ermittlung einer Zufallszahl basierend auf der gemessenen Temperatur erfolgen.

Jedes der verschiedenen Sendezeitschemata kann asynchron (Empfangszeitpunkt ist nicht exakt vorhersehbar; nur der Empfang innerhalb eines definierten Zeitfensters ist möglich) oder synchron (Empfangszeitpunkt ist prädizierbar) mit dem durch die lokalen Datensammeleinrichtungen gebildeten Empfangssystem ausgebildet sein.

Im Falle des für batteriebetriebe Datensammeleinrichtungen besonders vorteilhafte "Endgeräte Synchronfunk", bei dem ein Funkempfänger nur ein sehr kurzes Empfangszeitfenster für den Empfang des vom Endgerät ausgesendeten Funktelegramms öffnet, müssen die Sendezeitpunkte der Endgeräte in der Datensammeleinrichtung bestimmbar insbesondere prädizierbar sein und können daher nicht zufällig durch das Endgerät variiert werden. Ist der Empfangszeitpunkt durch den Funkempfänger bspw. die Datensammeleinrichtung allerdings prädizierbar, besteht die - zumindest theoretische - Möglichkeit, durch Aufzeichnung und Analyse der gemessenen zeitlichen Abweichung der tatsächlichen Empfangszeitpunkte aller Funktelegramme von ihrem nominalen berechneten Empfangszeitpunkt (bspw. mittels einer Korrelationsanalyse oder Histogramm-Analyse) die Prozessdaten-Funktelegrammen und die Verbrauchsdaten-Funktelegramme eines Endgeräts zu identifizieren und damit die Verbrauchsdaten-Funktelegramme und die anonymisierten Prozessdaten-Funktelegramme korrelieren zu können und somit die Geräte-ID der Anonymisierungs-ID zuordnen zu können.

Allerdings ist es aufgrund der unterschiedlichen Taktung der VerbrauchsdatenTelegramme (beispielsweise nur alle 14 Tage oder einmal im Monat) und den Prozessdaten-Funktelegrammen (typisch 15 Minuten) und den damit zu den Sendezeitpunkten üblicherweise wechselnden Umgebungsbedingungen in der Praxis sehr unwahrscheinlich, dass eine identische zeitliche Abweichung des tatsächlichen Empfangszeitpunkts von dem nominalen berechneten Empfangszeitpunkt (Drift) vorliegen dürfte, die eine ableitbare Korrelation ermöglicht.

Um selbst diese Möglichkeit, die nur beim Endgeräte- Synchronfunk vorliegt, auszuschließen, kann vorgesehen werden, dass systematische (und damit grundsätzlich korrelierbare) Verschiebungen in dem ersten Sendezeitschema und/oder in dem zweiten Sendezeitschema kompensiert werden. Vorzugsweise wird eine solche Kompensation systematischer Verschiebungen nur in einem der Sendeschemata vorgenommen. Dies kann durch eine Normierung auf Umgebungsbedingungen vorzugsweise für das Prozessdaten-Funktelegramm erfolgen.

Weil der bestimmende Einfluss für systematische Verschiebungen die Umgebungstemperatur ist, kann eine Drift zum nominalen Sendezeitpunkt bspw. durch Messung der Umgebungstemperatur im Endgerät und Kompensation der sich bei der aktuell gemessenen Temperatur zu erwartenden Drift in den Sendeparametern kompensiert werden, beispielsweise mit einem Polynom in Abhängigkeit der gemessenen Temperatur (etwa der Form *a*₀ + *a*₁ · *T* + *a*₂ *· T*² + ...) zur Kompensation von Drift oder Sprüngen der Sendefunkfrequenzen (Trägerfrequenz oder/und Modulation), der Sendeleistung und/oder des Sendezeitpunkts.

Erfindungsgemäß wird die Anonymisierungs-ID zyklisch, bspw. zu fest oder stochastisch vorgegebenen Zeitpunkten oder ereignisgesteuert, durch das Endgerät geändert wird. Damit wird erreicht, dass für den Fall, dass durch Unberechtigte eine Korrelation zwischen Anonymisierungs-ID und Geräte-ID hergestellt werden konnte, diese Korrelation durch das zyklische Ändern der Anonymisierungs-ID nach kurzer Zeit aufgehoben wird. Die neue Anonymisierungs-ID kann nach einem pseudozufälligen Verfahren, bspw. mit einem softwarebasierten Zufallszahlengenerator, geändert werden oder durch Variation mit echten Zufallszahlen erfolgen, bspw. unter Einbeziehen von nicht vorhersagbaren Parametern wie bspw. der aktuell gemessen Temperatur am Micro-Controller des Endgeräts. Auch eine Mischung, bspw. ein Alternieren zwischen einer pseudozufällig erzeugten Autonomisierungs-ID und einer "neu gewürfelten" Anonymisierungs-ID, kann in einer erfindungsgemäßen Variante des Verfahrens vorgesehen sein. Da Energiemonitoring-Systeme oder Energieeinspar- bzw. Energieeffizienz-Systeme häufig nur relativ kurze Zeiträume für die Energieoptimierung benötigen, die kurz sind im Vergleich zu den zyklischen Änderungen der Anonymisierungs-ID, sind solche Systeme bzw. die auf solchen Systemen ausgeführten Verfahren robust gegenüber derartige Änderungen der Anonymisierungs-ID, weil Werte mit der alten Anonymisierungs-ID für die Zukunft einfach durch Werte mit der neuen Anonymisierungs-ID ersetzt werden können. Sind in den Prozessdaten-Funktelegrammen die Ordnungsdaten, insbesondere die Anlagen-Kennung, als Teil der Payload vorhanden, so ist das zyklische Ändern der Anonymisierungs-ID für die Energiemonitoring-Systeme bzw. die Energieeffizienz-Systeme völlig unkritisch, da solche Systeme nur die Information benötigen, ob die empfangene Daten in den Energieeinspar-Berechnungs-Verfahren, die anlagenbezogen ausgeführt werden, zu verwenden sind oder nicht.

Erfindungsgemäß können die Prozessdaten-Funktelegramme auch mittels eines oder mehrerer Schlüssel, insbesondere eines privaten "General-Prozessdaten-Funktelegramm-Schlüssels" zum Verschlüsseln der Payload-Daten (Nutzdaten) der Prozessdaten-Funktelegramme, verschlüsselt und als verschlüsselte Funktelegramme übertragen werden. Eine geräteindividuelle Verschlüsselung, bei der jedes Endgerät einen individuellen Prozessdaten-Schlüssel (Prozessdaten-Funk-Key) zur Verschlüsselung eines Teils (Blockweise Verschlüsselung) oder des gesamten Bereichs der Payload im anonymisierten Prozessdaten-Funktelegramm hat, ist für das erfindungsgemäßen Verfahren zwar nicht vorgesehen, da die zur Entschlüsselung benötigten Schlüssel dann unter Bezug auf die Anonymisierungs-ID in der auch als Key-Store bezeichneten besonders gesicherten Umgebung des Verbrauchsablesesystems abgelegt werden müssten, insbesondere wenn die Anonymisierungs-ID erfindungsgemäß außerhalb der Endgeräte nicht gespeichert werden soll und eine Zuordnung der Anonymisierungs-ID zur Geräte-ID in dem Verbrauchserfassungssystem möglich wäre. Das erfindungsgemäße Verfahren kann aber auch mit einer geräteindividuellen Verschlüsselung eines Teils (Blockweise Verschlüsselung) oder des gesamten Payload-Bereichs (d.h. aller Nutzdaten) des Prozessdaten-Funktelegramms angewendet werden.

Der Prozessdaten-Schlüssel ist grundsätzlich verschieden zu dem Verbrauchsdaten-Funkschlüssel, so dass eine Entschlüsselung des Verbrauchsdaten-Funktelegramms nicht in dem Energieeinspar-System (Energie-Effizienz-System), sondern insbesondere nur in dem zentralen IT-Systems des Verbrauchsabrechnungsdienstleisters entschlüsselt werden kann.

Ein Prozessdaten-Funk-Schlüssel, der nur für die Endgeräte einer Geräteart (bspw. Wasserzähler oder Wärmezähler oder Heizkostenverteiler) eines bestimmten Gerätetyps (bspw. Ultraschall-Wärmezähler, Messkapsel-Wärmezähler) bspw. ein oder einer bestimmten Geräteversion eines Gerätetyps (Generation 1, Generation 2) verwendbar ist, kann als "Geräteart-Key" oder "Gerätetyp-Key" oder "Gerätegenerationen-Key" für das erfindungsgemäßen Verfahren verwendet werden.

In einer Ausführungsform kann erfindungsgemäß vorgesehen werden, dass die zur Entschlüsselung der Prozessdaten-Funktelegramme erforderlichen Schlüssel in den Geräten oder Systemen gespeichert sind, die die in den Prozessdaten-Funktelegrammen enthaltenen Datenwerte auswerten sollen und hierfür das Prozessdaten-Funktelegramm entschlüsseln müssen. Die Schlüssel zur Entschlüsselung der Prozessdaten-Funktelegramme können, statt einer lokalen Speicherung diesen Geräten, beispielsweise auch durch Download nach Bereitstellung durch das IT-System (Abholung aus dem Key-Store) bezogen werden.

Durch die verschlüsselte Übersendung auch der Prozessdaten-Funktelegramme erfüllen auch die Prozessdaten-Funktelegramme die Anforderungen an die Datensicherheit, insbesondere an den Schutz vor unberechtigtem Mitlesen und an den Schutz der Integrität der Daten, unabhängig davon, dass die Daten ohnehin anonymisiert sind und keiner Nutzeinheit (Wohnung, Gewerberäume) zugeordnet werden können. Durch eine Verschlüsselung der Prozessdaten-Funktelegramme sind auch diese bei der Datenfernübertragung zusätzlich wirksam vor Angriffsszenarien auf bspw. cloudbasierte Technologien, wie "Packet Sniffing".

In einer weiteren Ausführungsform des erfindungsmäßen Verfahrens, die anstelle oder zusätzlich zu einer Verschlüsselung des Prozessdaten-Funktelegramm eingesetzt werden kann, können die Prozessdaten "verschleiert" durch das Endgerät übertragen werden. Unter einer "Verschleierung der Daten" ist zu verstehen, dass die Datenwerte nur mit genauer Kenntnis der absoluten Position der einzelnen Bits innerhalb der Nutzdaten des Funktelegramms (d.h. dem Nutzdatenbereich der Telegrammstruktur) dekodiert werden können. Bspw. kann der gesamte Nutzdatenbereich, d.h. jedes Bit des Nutzdatenbereichs, mit Datenwertbruchstücken also einzelne Bits eines Byte oder einzelne Byte eines Datenwerts gefüllt sein und dann nicht mehr als zusammengehörig erkennbar sein. Nur in Kenntnis der Position und ggf. der Länge des Datenwerts können die Datenwerte in dem Nutzdatenbereich der Telegrammstruktur identifiziert und damit extrahiert (dekodiert) werden.

Die Struktur solcher auch als "herstellerspezifisch kodierte Funktelegramme" bezeichneten Funktelegramme wird durch den Hersteller streng geheim gehalten.

Eine Möglichkeit der Verschleierung der Datenwerte könnte bspw. darin liegen, einen 4 Byte Datenwert anstatt in einer festen Datenpunkt-Struktur (2 Byte Datenwert-Kennung + 4 Byte Datenwert) durch Verstreuen bzw. Verteilen der 32-Datenwerte-Bits über mehrere Payload-Bytes anzuordnen und bei der Dekodierung wieder zusammenzuführen. Auch kann auf eine gemäß der DIN EN 13757-3 notwendigen Datenwert-Kennung (Data-Identification-Field, Value-Identification-Field), da die einzelne Bitposition und deren Bedeutung für den Funkempfänger bekannt sind, verzichtet werden, was ein sehr komprimiertes Telegramm ergibt.

Erfindungsgemäß kann das vorgeschlagene Verfahren zur Anonymisierung auch erst in einer lokalen Datensammeleinrichtung umgesetzt werden. Dies stellt auch einen eigenständigen erfindungsgemäßen Aspekt dar, mit dem die Lösung der erfindungsgemäßen Aufgabe erreichbar ist. Dabei wird der Fachmann die im Zusammenhang mit dem vorbeschrieben Verfahren beschrieben Merkmale entsprechend umsetzen, so dass auf eine gesonderte Beschreibung dieser Merkmale hier verzichtet wird. Diese Merkmale sind aber ausdrücklich auch mit dieser Verfahrensvariante umsetzbar.

In diesem Fall werden das Verbrauchserfassungsgerät / Sensorgerät und die dem Verbrauchserfassungsgerät / Sensorgerät zugeordnete Datensammelreinrichtung als Endgerät im Sinne der Erfindung verstanden. Dies kann sich technisch bspw. daraus ergeben, dass das Verbrauchserfassungsgerät / Sensorgerät ohne eine ihm zugeordnete Datensammeleinrichtung nicht an dem Verbrauchsfernablesesystem (AMR-System) teilnehmen kann. Mit anderen Worten wird das Verbrauchserfassungsgerät / Sensorgerät und das durch das Verbrauchserfassungsgerät / Sensorgerät ausgesandte Funktelegramm erst durch den Empfang eines Funktelegramms durch den zugeordneten Datensammler in das Funknetz des Verbrauchsfernablesesystems und des Energieeinspar-System bzw. Energieeffizienz-Systems integriert und das Prozess-Datentelegramm entsprechend erst durch die das Endgerät im Sinne der Datensammeleinrichtung bildende Endgerät erzeugt.

In einer solchen, bevorzugten Ausführungsform des erfindungsgemäßen Verfahrens wird die Anonymisierungs-ID durch die in dem Gebäude installierte lokale Datensammeleinrichtung erzeugt, wobei die Datensammeleinrichtung nach dem Empfang von Endgeräte-Prozessdaten-Funktelegrammen, welche die Geräte-ID des Endgeräts noch beinhalten und somit nicht anonymisiert Daten enthalten, die Geräte-ID des Endgeräts in dem Prozessdaten-Funktelegramm durch eine vorzugsweise in der Datensammeleinrichtung zufällig erzeugte Anonymisierungs-ID ersetzt. Die so anonymisierten Prozessdaten-Funktelegramme werden dann durch die Datensammeleinrichtung in das gemeinsame Funknetz zum Empfang beispielsweise durch ein Energie-Effizienz-Modul ausgesendet, oder die Datensammeleinrichtung leitet die bis auf die Anonymisierung unveränderten Prozessdaten-Funktelegramme, insbesondere mit unverändertem Payload-Datenbereich, als anonymisierte Prozessdaten-Funktelegramme über das Weitbereichs-Funknetz, bspw. ein Mobilfunknetzwerk, zur einer Zentrale oder in die Cloud weiter.

Die Durchführung des erfindungsgemäßen Verfahren in der lokalen Datensammeleinrichtung ist auch geeignet, um Endgeräten, die kein anonymisierten Prozessdaten-Funktelegramm aussenden können und/oder nicht Teil des gemeinsamen Funknetzwerks des Verbrauchsablesesystems und des Energieeinspar-Systems / Energieeffizienz-Systems sind, in das Energieeinspar-System einbinden zu können. Alle erfindungsgemäßen Merkmale des Verfahrens sind grundsätzlich geeignet, um diese zur Anonymisierung der Prozessdaten-Funktelegramme auch in einer lokalen Datensammeleinrichtung durchzuführen, die in Kombination mit dem Verbrauchserfassungsgerät- oder Sensorgerät (oder eines anderen zuvor beschrieben Endgeräts) das Endgerät bildet.

Gemäß der bevorzugten Ausführungsform der Erfindung können als Datenwerte für Energiemonitoring-Aufgaben und Energieeffizienz- oder auch Energieeinsparverfahren über Regelungs- und Steuerungs-Verfahren die wichtigsten Kenndaten einer Heizungs-/Kühl-Anlage (also einer gebäudetechnischen Anlage) oder Liegenschaft mit einem Prozessdaten-Funktelegramm übertragen werden. Dazu zählen insbesondere einzelne, mehrere oder alle der nachfolgend aufgeführten Werte:
- Heizungs-/Kühlanlagen-Bezeichnung
- Heizungs-/Kühlanlagen-Identifikationsnummer
- Heiz-/Kühlkreis-Nummer (in der Regel eine einfache Durchnummerierung innerhalb einer Anlage)
- Etageninformation (sollte nicht verwendet werden, falls weniger als 5 Nutzeinheiten je Etagen oder ein kleines Gebäude mit weniger als 5 Nutzeinheiten vorliegt, da sonst eine Zuordnung zu einer Nutzeinheit nicht ausgeschlossen werden kann)
- Kenndaten zu den Heizkörpern (bspw. aus den Datenblättern der Heizkörperhersteller entnommen oder gemäß Kennzeichnungsregel eines Abrechnungsdienstleisters bspw. eine Heizkörper-Gruppennummer)
- Versorgungsstrang-Bezeichnung (Kaltwasser, Warmwasser)
- Versorgungsstrang-Nummer

Darüber hinaus kann das Prozessdaten-Funktelegramm anwendungsbezogene Datenwerte enthalten, wie etwa einen, mehrere oder alle der nachfolgend ausgeführten Prozessdaten bzw. Messwerte:
- "Rohtemperaturen" also nicht korrekturgerechnete gemessene "Original"-Temperaturen (Werte des Fühlers), wie bspw. Raumluft-, Vorlauf-, Rücklauf-, Heizkörperoberflächen-, Rohroberflächen- oder Heizwassertemperaturen
- mit Kenndaten oder Kennlinien korrigierte und/oder errechnete Temperaturen wie etwa: Raumluft-, Vorlauf-, Rücklauf-, logarithmische Über-Temperatur (Δ*T_{log}*), ggf. abhängig von einem Betriebspunkt
- Versorgungs-, Last- und Betriebsleistungszustände
- Wärmemenge (Wärme, Kälte), Einheiten eines elektronischen Heizkostenverteilers
- Volumen, Volumeninkremente (gemessenes Volumen innerhalb eines Zeitinterfalls)
- Wärmeleistung, Kühlleistung
- Feuchte, CO2, etc.
- aus den vorstehenden Datenwerten abgeleitete Datenwerte, bspw. für einen Heizkörper den Versorgungszustand, den hydraulischen Zustand, die Gewichtungsfaktoren und andere abgeleitete Kennzahlen für Heizkörper.

Für eine einfache Umsetzung des erfindungsgemäß vorgeschlagenen Verfahrens in einem lokalen Funknetzwerk kann vorgesehen werden, die durch das Endgerät im Prozessdaten-Funktelegramm zu übertragenden Datenwerte, bspw. die gemessenen Prozessdaten wie Temperaturen, Hubstellungen, Volumenströme, Leistungen, Spitzenwerte und dgl. in dem Gerätespeicher des Endgeräts zu sammeln, in ihrer zeitlichen Reihenfolge in einem Prozessdaten-Funktelegramm anzuordnen oder einen Mittelwert zu bilden und das Prozessdaten-Funktelegramm als Synchron-Funktelegramm zu prädizierbaren Zeitpunkten oder als asynchron-Funktelegramm in festgelegten Zeitintervallen bspw. stündlich auszusenden. Die festgelegten Sendezeitintervalle können als prädizierte oder prädizierbare Zeitintervalle vorgegeben sein, wobei eine oben bereits beschriebene Randomisierung des Sendezeitpunkts erhalten bleibt, ebenso wie jede andere Randomisierung des Sendeschemas (Sendeleistung, Sendefrequenz). Dies erleichtert einen sogenannten asynchronen Empfang, der programmtechnisch durch ein Empfangszeitfenster mit fester Länge und mit vorgegeben Zyklen, sehr einfach zu realisieren ist.

Entsprechend bezieht sich die Erfindung auch auf ein Endgerät zur Verbrauchserfassung von Verbrauchs-Datenwerte in einem Verbrauchsablesesystem mit den Merkmalen des Anspruchs 8, wobei das Endgerät dazu eingerichtet ist, die Verbrauchs-Datenwerte in mindestens einem Verbrauchsdaten-Funktelegramm eines Funknetzes des Verbrauchsablesesystems zusammen mit einer Geräte-ID des Endgeräts auszusenden, die dem Endgerät eindeutig zugeordnet und in einem Verbrauchsablesesystem bekannt ist. Zur Anonymisierung des Endgeräts in einem Energie-Effizienz-System, im dem auf durch das Endgerät erfasste Datenwerte zugegriffen wird, wird erfindungsgemäß vorgeschlagen, dass das Endgerät dazu eingerichtet ist, zusätzlich zu dem mindestens einen Verbrauchsdaten-Funktelegrammen auch mindestens ein Prozessdaten-Funktelegramme auszusenden, das sich von dem Verbrauchsdaten-Funktelegramm zumindest dadurch unterscheidet, dass in dem Prozessdaten-Funktelegramm anstelle der Geräte-ID eine Anonymisierungs-ID ausgesendet wird, die dem Endgerät (6) in dem Verbrauschablesesystem nicht zuordenbar ist. Es versteht sich, dass die Übersendung der Funktelegramme, wie in Verbrauchsablesesystemen üblich, wiederholt ausgesendet werden.

Gemäß einer bevorzugten Ausführungsform kann vorgesehen sein, dass das Endgerät dazu eingerichtet ist, Nutzdaten in dem Prozessdaten-Funktelegramm zu verschleiern, so dass ein Datenwert insbesondere nur mit Kenntnis der absoluten Position der einzelnen Bits in den Nutzdaten des Prozessdaten-Funktelegramms dekodierbar ist. Dieses Vorgehen wurde im Zusammenhang mit der Durchführung des erfindungsgemäßen Verfahrens bereits ausführlich beschrieben, so dass auf eine weitere Beschreibung verzichtet werden kann.

Es versteht sich für den verständigen Fachmann, dass in dem erfindungsgemäß vorgeschlagenen Endgerät sämtliche Merkmale oder Teile der Merkmale des vorbeschriebenen Verfahrens implementiert sein können und sich die Erfindung auch hierauf bezieht.

Die Erfindung bezieht sich auch auf eine Vorrichtung zum Übertragen von Daten mittels Funktelegrammen in einem gemeinsamen Funknetz des Verbrauchsfernablese- und Energie-Effizienz-Systems (Energieeinspar-Systems) gemäß den Merkmalen des Anspruch 10, mit in einem Gebäude installierten Endgeräten zur Verbrauchserfassung mit einer Recheneinheit, die dazu eingerichtet ist, Verbrauchswerte zu erfassen und in mindestens einem Verbrauchsdaten-Funktelegramm, das die Geräte-ID des Endgeräts beinhaltet, auszusenden. Die Geräte-ID ist dem Endgerät eindeutig zugeordnet und in dem Verbrauchsfernablesesystem und dem Verbrauchsabrechnungssystem bekannt.

Die Recheneinheit des Endgeräts ist weiter dazu eingerichtet, die Verbrauchsdaten-Funktelegramme mit einem Verbrauchsdaten-Schlüssel zum Verschlüsseln zu verschlüsseln und in verschlüsselter Form auszusenden, wobei die Verschlüsselung des Verbrauchsdaten-Funktelegramms mit dem Verbrauchsdaten-Schlüssel in dem Endgerät erfolgt.

Eine entfernte Datenverarbeitungseinrichtung, die Teil des erfindungsgemäßen Verbrauchsablesesystems sein kann, ist mit einer Recheneinheit vorgesehen, die zum Entschlüsseln der empfangenen Verbrauchsdaten-Funkdatentelegramme mittels eines Verbrauchsdaten-Schlüssels zum Entschlüsseln des Verbrauchsdaten-Funktelegramms eingerichtet ist, wobei der Verbrauchsdaten-Schlüssels zum Entschlüsseln des Verbrauchsdaten-Funktelegramms nur innerhalb der zentralen IT-Umgebung (Datenumgebung) des Verbrauchsablesesystems, bspw. eins Verbrauchsabrechnungsdienstleisters, vorliegt.

Erfindungsgemäß ist die Recheneinheit der Endgeräte weiter dazu eingerichtet, in dem Gebäude Prozess-Datenwerte zu erfassen und in mindestens einem Prozessdaten-Funktelegramm auszusenden, wobei das Prozessdaten-Funktelegramm keine dem Endgerät eindeutig zugeordnete Geräte-ID, sondern mindestens eine in dem gesamten Verbrauchsablesesystem, zu dem auch ein Verbrauchsabrechnungssystem gehört oder gehören kann, nicht bekannte Anonymisierungs-ID aufweist, die (vollständig) nur in dem die Prozessdaten-Funktelegramme aussendenden Endgerät bekannt ist, wobei das Endgerät bspw. ein an dem gemeinsamen Funknetzwerk von Verbrauchsablesesystem und Energieeinspar-System / Energie-Effizienz-System teilnehmendes Verbrauchserfassungsgerät bzw. auch eine Kombination von Verbrauchserfassungsgerät- oder Sensorgerät und lokal zugewiesener Datensammeleinrichtung sein kann.

Vorzugsweise ist auch ein Energie-Effizienz-Modul von der erfindungsgemäßen Vorrichtung umfasst, das dazu eingerichtet ist, auf einen Energieerzeuger in dem Gebäude einzuwirken. Dieses Energie-Effizienz-Modul ist dann insbesondere auch dazu eingerichtet, die Prozessdaten zu verarbeiten. Das Einwirken auf den Energieerzeuger erfolgt dann also auf Grundlage der in den Prozessdaten-Funktelegrammen enthaltenen Daten.

Die Vorrichtung, und insbesondere deren Endgeräte, Datenverarbeitungseinrichtung(en) und Energie-Effizienz-Modul(e) weist eine Recheneinheit auf, die zur Durchführung des vorbeschriebenen Verfahrens oder Teilen davon eingerichtet ist bzw. sein kann.

Grundsätzlich können das erfindungsgemäß vorgeschlagene Verfahren oder einzelne Teile davon in einem bspw. als Verbrauchserfassungsgerät oder Sensorgerät (Temperatursensor, Durchflusssensor, Rauchwarnmelder oder dgl.) ausgebildeten Endgerät implementiert werden, wobei jeweils die mit dem Senden und/oder Empfangen des Prozessdaten-Funktelegramms verbundenen Funktionen in der Recheneinheit implementiert werden. Dabei muss das Endgerät nicht zwangsläufig ein einzelnes Gerät in einem Gehäuse sein. Das Endgerät kann auch durch ein Verbrauchserfassungs- oder Sensorgerät in Verbindung mit einem ihm im lokalen Nahbereich zugewiesenen Systemgerät einer lokalen Datensammeleinrichtung (bspw. Datensammler, Masterdatensammler, Heizungsregeleinrichtung, Router oder dgl.), d.h. eine Kombination von mehreren Geräten in mehreren verschiedenen Gehäusen, gebildet sein. Das dem Verbrauchserfassungsoder Sensorgerät zugewiesene Systemgerät bindet das Verbrauchserfassungsoder Sensorgerät in das gemeinsame Funknetz von Verbrauchsfernablesesystem und Energieeinspar-System ein.

Übertragen im Sinne der vorliegenden Beschreibung wird auch nur als Senden oder Empfangen der entsprechenden Funktelegramme verstanden, abhängig davon, ob das ausgesendete Funktelegramm auch tatsächlich empfangen wird.

Erfindungsgemäß umfasst die erfindungsgemäß vorgeschlagene Vorrichtung aber auch ein System mit mindestens einem das Prozessdaten-Funktelegramm erzeugenden Gerät, insbesondere einem Endgerät (Verbrauchserfassungsgerät bzw. Sensorgerät und/oder lokale Datensammeleinrichtung), und mit mindestens einem das Prozessdaten-Funktelegramm empfangenden und/oder wieder aussendenden Gerät (insbesondere einer Energie-Efferenz-Modul, das auch Teil einer Datensammel- und/oder Weiterleitungseinrichtung sein kann).

Weitere Vorteile, Merkmale und Anwendungsmöglichkeiten der vorliegenden Erfindung ergeben sich auch aus der nachfolgenden Beschreibung von Ausführungsbeispielen und der Zeichnung. Dabei bilden alle beschriebenen und/oder bildlich dargestellten Merkmale für sich oder in beliebiger Kombination den Gegenstand der vorliegenden Erfindung, auch unabhängig von ihrer Zusammenfassung in den Ansprüchen oder deren Rückbezügen.

Es zeigen:
- Fig. 1: eine schematische Darstellung dreier Mehrfamiliengebäude mit Verbrauchsablesesystem;
- Fig. 2: eine schematische Darstellung einer erfindungsgemäßen Vorrichtung zum Übertragen von Daten mittels Funktelegrammen in einem gemeinsamen Funknetz eines Verbrauchsablesesystems und eines Energie-Effizienz-Systems (Energieeinspar-Systems) gemäß einer einfachen Ausführungsform; und
- Fig. 3a, 3b, 3c: schematisch den Aufbau eines standardisierten OMS-Funktelegramms.

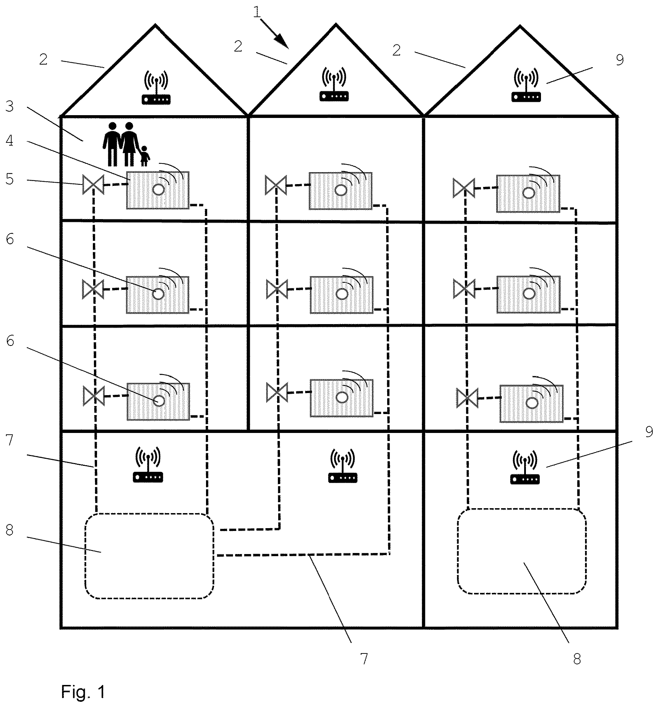

In Fig.1 ist schematisch eine Liegenschaft 1 als Gebäudeanordnung mit drei als Mehrfamilienhäusern dargestellten Gebäuden 2 mit jeweils mehreren Wohnungen 3 dargestellt. Jede Wohnung 3 ist mit mindestens einem Heizkörper 4 ausgestattet. Über ein Heizkörperregelventil 5 kann die Raumtemperatur der Räume jeder Wohnung 3 individuell geregelt werden.

Die Raumtemperatur und die Heizkörperoberflächentemperatur eines Heizkörpers 4 wird mit einem Heizkostenverteiler im Sinne eines Endgerätes 6 erfasst.

Aus diesen Temperaturmesswerten ermittelt der Heizkostenverteiler 6 die aktuelle Wärmeabgabe des Heizkörpers 4, wobei die Heizkörperleistung und weitere Bewertungsfaktoren in die Berechnung einfließen. Die aktuelle Wärmeabgabe wird in dem Heizkostenverteiler 6 typischer Weise über vorgegebene Zeiträume auch kumuliert und beispielsweise als Jahresverbrauch zum Stichtag, dem sog. Stichtagsverbrauchwert gespeichert. Diese aktuelle Wärmeabgabe und der Stichtagsverbrauchswert stellen Verbrauchsdaten dar, wobei die aktuelle Wärmeabgabe (Wärmeleistung) gleichzeitig auch als Prozess-Datenwert verstanden werden kann.

Der Heizkörper 4 ist an Heizungswasserrohrleitungen 7 (Heizungsstrang, Heizkreislauf mit zu dem Heizkörper hinführenden Vorlauf und von dem Heizkörper wegführenden Rücklauf) angeschlossen, die die in der Wärmeversorgungsanlage (Heizung) als Energieerzeuger 8 erzeugte Wärmeenergie zu den Heizkörpern 4 transportieren.

Die Heizkostenverteiler 6 übertragen ihre erfassten Temperaturwerte (Prozess-Datenwerte) und ermittelten Datenwerte (Verbrauchs-Datenwerte) in Funktelegrammen zu Datensammeleinrichtungen 9. Die Datensammeleinrichtungen 9 bilden mit den Endgeräten 6 ein lokales Funknetz des Verbrauchsfernablesesystems. Die Datensammeleinrichtungen 9 übertragen diese Funktelegramme dann über eine Datenfernübertragungseinrichtung automatisiert an eine (in Fig. 1 nicht dargestellte) entfernte Datenverarbeitungseinrichtung, bspw. ein IT-System eines Verbrauchsabrechnungsdienstleisters. Insgesamt wird so das Funknetz des Verbrauchsablesesystems gebildet.

Es sei darauf hingewiesen, dass das hier beschrieben System nur ein Beispiel für ein Verbrauchsablesesystem ist, mit dem die Erfindung umgesetzt werden kann. Es sind vielfältige Variationen denkbar, die im Griffbereich des Fachmanns liegen. Bspw. muss der Energieerzeuger kein Wärmeerzeuger sein. Auch kann ein die Datenwerte erfassendes und/oder erzeugendes Endgerät auch unmittelbar eine Datenfernübertragungseinrichtung aufweisen, wie ein Mobilfunkmodul. In diesem Fall könnte auch die Installation von Datensammeleinrichtung in dem Verbrauchsablesesystem verzichtet werden. Andererseits ist auch denkbar, dass die Heizkostenverteiler 6 ausschließlich eine Kurzstrecken-Funkübertragung (Short Range Device) zu einer Datensammeleinrichtung 9 aufbauend und mit dieser zugewiesenen Datensammeleinrichtung 9 ein Endgerät bilden, das in dieser Kombination an dem gemeinsamen Funknetz von Verbrauchsablesesystem und Energieeinspar-System teilnimmt.

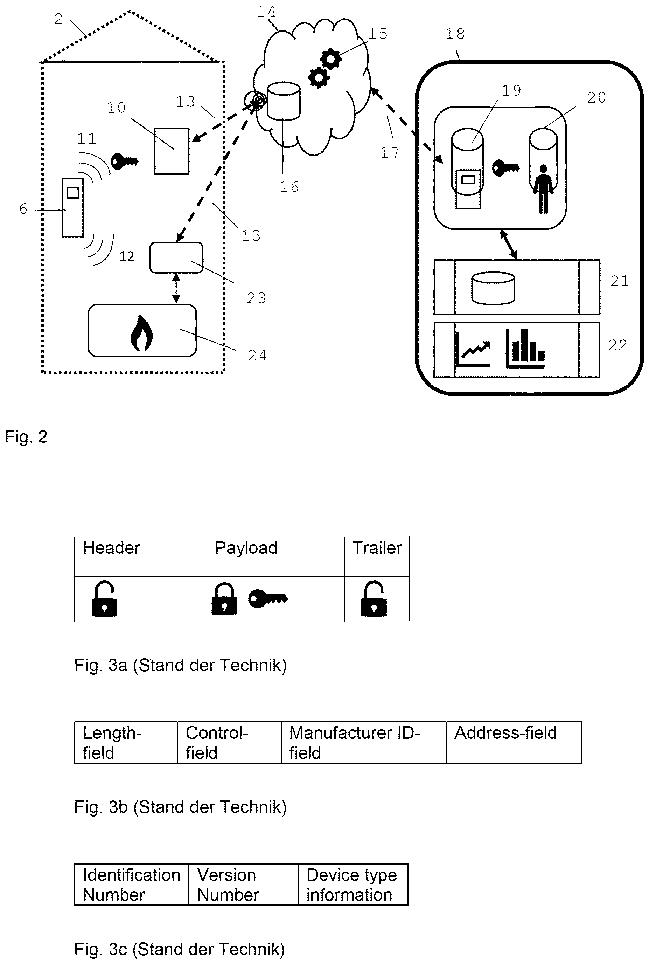

In Fig. 2 ist schematisch eine erfindungsgemäße Vorrichtung mit zur Durchführung des erfindungsgemäßen Verfahrens eingerichteten Komponenten dargestellt. Auch dies ist nur als ein schematisches Beispiel für ein Verbrauchsfernablesesystem und Energieeinspar-System zu verstehen, mit dem das erfindungsgemäße Verfahren grundsätzlich ausführbar ist. Dabei kann es auch sein, dass in Fig. 2 bestimmte Funktionen mit verschiedenen Bezugszeichen belegt sind, die bspw. in einem Modul zusammengefasst sind, oder dass mehrere, auch unterschiedliche Funktionen als Modul mit einem Bezugszeichen versehenen sind.

Die in einem Gebäude installierten Endgeräte 6, in dem nachfolgenden Text auch als Heizkostenverteiler bezeichnet, erfassen Verbrauchs-Datenwerte und Prozess-Datenwerte und senden diese in Funktelegrammen 11, 12 aus. Für eine Übertragung der Verbrauchs-Datenwerte zu einer zentralen Datenverarbeitungseinrichtung 18, bspw. einem IT-System eines Abrechnungsdienstleisters für die Heizkostenabrechnung, sendet der Heizkostenverteiler 6 seine erfassten Verbrauchs-Datenwerte verschlüsselt in Verbrauchsdaten-Funktelegrammen 11 über eine Datenübertragungseinrichtung 10 aus. Die Datenfernübertragungseinrichtung 10 kann bspw. ein Mobilfunkmodul sein, das entweder in den Heizkostenverteiler 6 oder in eine stationäre Datensammeleinrichtung 9 (wie sie in Fig. 1 dargestellt ist) integriert sein kann. Entsprechend nutzt die Datenfernübertragungseinrichtung 10 eine Mobilfunkübertragungsstrecke 13.

Im Rahmen des erfindungsgemäß vorgeschlagenen Verfahrens sendet der Heizkostenverteiler 6 die erfassten Prozess-Datenwerte in einem Prozessdaten-Funktelegramm 12 aus. Die Prozess-Datenwerte können mit einem Prozessdaten-Schlüssel verschlüsselt oder unverschlüsselt ausgesendet werden kann. Hier dargestellt ist ein unverschlüsseltes herstellerspezifisches Funktelegrammen 12.

Im Folgenden wird als konkretes Ausführungsbeispiel angenommen, dass die Datenfernübertragungseinrichtung 10 in eine lokale stationäre Datensammeleinrichtung 9 integriert ist, die die Funktelegramme 11, 12, empfängt, in einem Zwischenspeicher speichert und die Verbrauchdaten-Funktelegramme 11 und ggf. die Prozessdaten-Funktelegramme 12 über die Mobilfunkdatenübertragungstrecke 13 zu einer Cloud 14 überträgt.

In der Cloud 14 werden die Daten der Funktelegramme 11, 12 entweder durch eine Cloud-Anwendung 15 verarbeitet und/oder in einem Cloud-Speicher 16, vorzugsweise als "Original-Funktelegramm des Endgeräts" (Rohdatentelegramm) gespeichert. Das Verbrauchsdaten-Funktelegramm 11 ist in der Cloud 14 daher mit dem Verbrauchsdaten-Schlüssel des Endgeräts 6 verschlüsselt gespeichert.

Über eine Internetkommunikation, beispielsweise über eine VPN Kommunikation als Internetübertragungsstrecke 17, greift die zentrale Datenfernübertragungseinrichtung 18, nachfolgend auch als IT-System des Abrechnungsdienstleisters bezeichnet, auf die in dem Cloud-Speicher 16 abgelegten Verbrauchsdaten-Funktelegramme 11 zu. In dem IT-System 18 des Abrechnungsdienstleisters werden die im Verbrauchsdaten-Funktelegramm 11 vorhandenen Verbrauchswerte mittels eines in dem "Key-Store" des IT-System vorliegenden Verbrauchsdaten-Schlüssels zum Entschlüsseln der Verbrauchsdaten im Verbrauchsdaten-Funktelegramms 11 entschlüsselt. Das Ver- und Entschlüsseln des Verbrauchsdaten-Funktelegramms 11 bezieht sich insbesondere auf den Nutzdatenbereich (Payload) des Funktelegramms 11, in dem die durch den Heizkostenverteilers 6 erfassten Verbrauchs-Datenwerte gespeichert sind. In dem Verbrauchsdaten-Funktelegramm können weitere Datenwerte, insbesondere Funknetz-Qualitätskenngrößen, übertragen werden, die vorzugsweise als Datenblöcke in dem Nutzdatenbereich des Funktelegramms 11 gruppiert sind und mit einem vom Verbrauchsdaten-Schlüssel verschiedenen Schlüssel verschlüsselt sind.

In dem Verbrauchsdaten-Funktelegramms 11 ist im unverschlüsselten Teil des Funktelegramms eine Geräte-ID im Sinne einer eindeutigen Endgeräte-Identifikationsnummer enthalten. Die Verbrauchs-Datenwerte werden zu der Geräte-ID in eine Ablesewerte-Datenbank 19 der zentralen Datenverarbeitungseinrichtung 18 gespeichert.

In einer weiteren Datenbank der zentralen Datenverarbeitungseinrichtung 18, der Liegenschafts-Datenbank 20, sind die Informationen zur Liegenschaft bzw. zum Gebäude 2 bzw. den Wohnungen 3 als Ordnungsdaten abgelegt. Ordnungsdaten sind beispielsweise eine Liegenschaftsnummer, Land, Ort, PLZ, Straße, Geokoordinaten und weiteren Ordnungskennzahlen, wie eine Kundenummer für den Kunden des Abrechnungsdienstleisters. In der Liegenschafts-Datenbank 20 sind ferner die Informationen zu den Nutzeinheiten (Wohnungen 3) der Liegenschaft bzw. des Gebäudes mit Ordnungskennzahlen, wie Etagennummer oder Wohnungsnummer, abgelegt. Auch die in der Wohnung 3 installierten Endgeräte 6 sind mit ihrer Geräte-ID als Referenz dort abgelegt.

Die Verbrauchs-Datenwerte werden anhand der Geräte-ID als Referenz dem Installationsort des Endgerätes in den IT-Systemen des Abrechnungsdienstleisters eindeutig zugeordnet. Anhand des Installationsorts werden die Verbrauchsdaten abschließend dem Nutzer der Wohnung 3, insbesondere dem/den Mieter oder Eigentümer (Nutzer), zugeordnet. So kann die verbrauchsabhängige Heizkostenabrechnung 21 für alle Nutzer eines Gebäudes erstellt werden. Die Heizkostenabrechnung 21 und ggf. weitere Auswertungen zum Verbrauch, wie ein Vergleich zum witterungsbereinigten Vorjahresverbrauch, können dann zum automatischen Abruf durch eine Hausverwaltung oder zur Anzeige für die Nutzer in einem Nutzerportal 22 bereitgestellt werden. Derartige Funktionen und Dienstleistungen eines Energiemonitoring-Systems und/oder Verbrauchsabrechnungssystems sind verbreitet und bekannt.

In einem kombinierten Verbrauchsfernablese- und Energieeinspar-System / Energieeffizienz-System (Steuern, Regeln der technischen Gebäudeausrüstung, insbesondere von Energieerzeugern 24 einer Heizung) werden zusätzlich zur Übertragung der Verbrauchsdaten zu der zentralen Datenverarbeitungseinrichtung 18 (mittels der Verbrauchsdaten-Funktelegramme 11) Datenwerte an ein System zur automatisierten Energieeinsparung übertragen, insbesondere an ein Energie-Effizienz-Modul 23.

Energie-Effizienz-Module 23, auf denen Verfahren zur Reduzierung des Energieverbrauchs ausgeführt werden, benötigen Prozess-Datenwerte der Heizungsanlage und des Gebäudes, die durch die Endgeräte 6, zu denen neben Verbrauchserfassungsgeräten wie Heizkostenverteilern auch einfache Sensorgeräte oder dgl. gehören, gemessen und/oder ermittelt werden. In Fig. 2 ist schematisch dargestellt, dass ein Endgerät 6, beispielsweise der Heizkostenverteiler, seine Prozessdaten über ein unverschlüsseltes Prozessdaten-Funktelegramm 12 aussendet, und dieses Prozessdaten-Funktelegramm 12 direkt von einem Energie-Effizienz-Modul 23 empfangen wird.

Das Energie-Effizienz-Modul 23 verfügt über eine entsprechende Empfangseinrichtung des gemeinsamen Funknetzes. Dies kann bevorzugt eine Empfangseinrichtung mit Schnittstellen sowohl für ein lokales Funknetz in dem Gebäude als auch für ein Weitbereichs-Funknetz, bspw. ein Mobilfunknetzwerk, sein.

So empfängt das Energie-Effizienz-Modul die Prozessdaten als Eingangsgrößen und verwendet diese für ein Verfahren zur Energieeinsparung, bspw. durch Eingriff auf den Energieerzeuger 24. Dieses Energie-Effizienz-Modul 23 ist in Fig. 2 als externe Energieeinspar-Komponente eines Energieerzeugers 24 dargestellt, könnte aber auch direkt mit in den Energieerzeuger 24 bspw. der Heizungsanlage integriert sein.

Sofern das Energie-Effizienz-Modul 23 die Prozessdaten-Funktelegramme 12 der Endgeräte 6 nicht direkt empfangen kann oder die Prozessdaten-Funktelegramme 12 der Endgeräte 6 verschlüsselt übertragen werden und durch das Energie-Effizienz-Modul 23 nicht entschlüsselt werden können, können die Prozessdaten-Funktelegramme mit den erfassten Prozessdaten zunächst in die Cloud 14 übertragen werden, bspw. über die Mobilfunkdatenübertragungsstrecke 13, die auch für die Verbrauchsdaten-Funktelegramme 11 verwendet wird.

In der Cloud 14 werden die Prozessdaten-Funktelegramme 12 dann bspw. in einem Cloud-Speicher 16 abgelegt und sind von dort durch das Energie-Effizienz-Modul 23 abrufbar bzw. an das Energie-Effizienz-Modul 23 übertragbar. Es ist möglich, dass die vollständigen Prozessdaten-Funktelegramme 12 in dem Cloud-Speicher 16 abgelegt und entsprechend übertragen werden, ggf. nach einer Entschlüsselung der Prozess-Datenwerte, die in dem Payload-Bereich des Funktelegramms vorhanden sind.

Es ist aber auch denkbar, dass die Prozessdaten-Funktelegramme 12 in einer Cloud-Anwendung 15 verarbeitet werden. Bspw. können die einzelnen Prozesswerte aus der Payload der Prozessdaten-Funktelegramme 12 extrahiert werden und im Rahmen einer Energieeinsparanwendung verarbeitet und aufbereitet bspw. über mathematische Verfahren (Mittelwertbildung) aggregiert und verdichtet werden. Die durch das in der Cloud-Anwendung 15 umgesetzte Verfahren zur Berechnung von Energieeinsparungen als Ausgabe erzeugten Stellbefehle oder Stellparameter für den Energieerzeuger 24 werden dann durch den Energieerzeuger 24 empfangen (in Fig.2 nicht dargestellt) oder von dem Energie-Effizienz-Modul 23 empfangen und durch den Energieerzeuger 24 abgefragt, um dann die in der Cloud-Anwendung 15 vorgegeben und/oder ermittelten Maßnahmen zur Energieeinsparung umsetzen.

**In** Fig. 3a, 3b, 3c ist die aus dem Stand der Technik bekannte Datenstruktur von Funktelegrammen dargestellt, die erfindungsgemäß für das vorgeschlagene Verfahren adaptiert und eingesetzt werden kann. Wie in Fig. 3a dargestellt, weist ein (beispielsweise standardkonformes) OMS-Funktelegramm einen unverschlüsselten Telegramm-Kopf (Header), einen verschlüsselten Nutzdatenbereich (Payload) und einen unverschlüsselten Telegramm-Abschluss (Trailer) auf. Insbesondere kann ein OMS-Funktelegramm aus genau diesen drei Komponenten Header, Payload und Trailer bestehen.

Fig. 3b zeigt den Aufbau des gemäß EN13757-4 (Frameformat B) aufgebauten Funktelegramm-Headers. In diesem Funktelegramm-Header sind die Informationen zur Telegrammlänge (Length-Field), zu Steuerungsinformationen (Control-Field), zum Hersteller des Endgerätes (Manufacturer ID-Field) und zum Absender des Funktelegramms (Address-Field) unverschlüsselt enthalten.

Fig. 3c zeigt die Struktur des Address-Fields. Dabei entspricht die Identification Number üblicherweise der eindeutigen Geräte-ID (Geräte-Seriennummer). Die Version Number gibt die Geräteversion an, und die Device-type Information gibt normkonform an, um welche Geräteart (Heizkostenverteiler, Wasserzähler, ...) es sich handelt. Das Address-Field wird oftmals auch als Endgeräte-Funk-ID oder Endgeräte-ID (Geräte-ID) bezeichnet und kann im Zusammenhang mit der Manufacturer-ID zur eindeutigen Identifikation des Gerätes verwendet werden, beispielsweise in den AMR-Systemen und/oder einer zentralen oder lokalen Datenverarbeitungseinrichtung.

Für effiziente und optimal wirksame Energieeinsparverfahren müssen die Prozess-Datenwerte der Endgeräte 6 sehr häufig erhoben und den Energie-Effizienz-Modulen 23 zur Verfügung gestellt werden. Sehr häufig kann bspw. hier eine Frequenz von 15 bis 60 Minuten bedeuten, was sehr häufig ist im Verglich zu Datenerhebung von Verbrauchsdaten, die bspw. nur einmal am Tag, einmal pro Woche oder sogar nur einmal pro Monat erhoben und übertragen werden.

Die standardkonformen Funktelegramme mit den Verbrauchsdaten können, in den IT-Systemen des Abrechnungsdienstleisters, anhand der Geräte-ID im Address-Field dem Installationsort dieses Endgerätes in einer Wohnung zugeordnet werden. Dadurch könnten durch unbefugte Dritte, bei Kenntnis des Installationsorts und Kenntnis der Schlüssel, die für die Entschlüsselung der Funktelegramme notwendig sind, das Nutzungsverhalten der Bewohner dieser Wohnung durch Aufzeichnen der Funktelegramme und Auswerten der in den Funktelegrammen vorhandenen Verbrauchsdaten ermittelt werden. Durch einfache technische Maßnahmen, wie ein sehr seltenes Aussenden von Verbrauchsdaten-Funktelegrammen (Datenerhebung und Sendehäufigkeit bspw. nur 1-mal im Monat) kann verhindert werden, dass das Nutzerverhalten durch "Mitschreiben" analysiert werden kann. Nachteilig ist hierbei allerdings, dass durch diese sehr geringe Aktualisierungsrate keine Erkenntnisse oder Hinweise zum Erzielen einer Energieeinsparung oder automatisierte Verfahren zur Energieverbrauchssenkung ableitbar sind.

Um durch technische Maßnahmen zu verhindern, dass eine Protokollierung des Nutzungsverhaltens anhand der mit hoher Aktualisierungsrate ausgesendeten Prozessdaten mit entsprechendem technischen Equipment möglich sein könnte, wird erfindungsgemäß zusätzlich zu dem (standardkonformen) Verbrauchsdaten-Funktelegramm 11, welches neben den Verbrauchs-Datenwerten auch die Geräte-ID enthält, ein zusätzliches anonymisiertes Prozessdaten-Funktelegramm 12 vorgeschlagen, das dem genauen Installationsort des Endgeräts in dem Gebäude nicht mehr zugeordnet werden kann. Damit sind die ggf. über das persönliche Energieverbrauchsverhalten der Nutzer Aufschluss gebenden Prozesswerte nicht mehr einem Nutzer (einem oder mehrerer Bewohner) zuordenbar, und eine Aufzeichnung des Nutzungsverhaltens der Bewohner einer Wohnung ist nicht mehr möglich, auch nicht in den IT-Systemen des Abrechnungsdienstleisters, sofern die Prozessdaten-Funktelegramme überhaupt dorthin übertragen werden. Außerdem können diese Prozessdaten-Funktelegramme 12 in einem eigenen Sendeschema übertragen werden, dessen Aussendehäufigkeit an die Erfordernisse des jeweils ausgeführten Energieeinspar-Verfahrens einfach individuell anpassbar ist.

Die erfindungsgemäß Lösung beinhaltet also, dass zusätzlich zu den für die Verbrauchsabrechnung, bspw. die Heizkostenabrechnung oder die Wasserverbrauchsabrechnung, verschlüsselt und mit geringer Häufigkeit ausgesendet Verbrauchsdaten-Funktelegramme 11, welche die Geräte-ID als eindeutiges Kennzeichen des Absenders enthalten müssen und die erfindungsgemäß nur innerhalb des IT-Systems des Verbrauchsabrechnungsdienstleisters entschlüsselt werden können, ein zweites anonymisiertes Funktelegramm mit hoher Senderate ausgesendet wird.

Diese zweite anonymisierte Funktelegramm ist das Prozessdaten-Funktelegramm 12, welches die für die Durchführung von Energieeffizienz-Verfahren (bspw. Energieeinsparung insbesondere Energieverbrauchsabsenkung, oder dgl.) erforderlichen Prozesswerte beinhaltet und mit einer für das Verfahren ausreichenden Sendehäufigkeit übertragen wird. Das erfindungsgemäß vorgeschlagene Verfahren beruht auf der Erkenntnis, dass es für die Energieeinspar-Verfahren nicht erforderlich ist, eine Zuordnung des Senders (Endgerät 6) genau zu einem Installationsort zu kennen, sondern es vielmehr ausreichend ist, den Sender einem Gebäude 2 und dessen Energieerzeuger 24, bspw. einem Heizkreis bzw. einem Heizungsstrang einer Heizung, vorzugsweise zur Erhöhung der Genauigkeit im Energieeinspar-Verfahren noch zusätzlich zur Etage in dem Gebäude zuordnen zu können.

Technisch erfolgt durch die Aufteilung auf zwei verschiedene Funktelegramme 11, 12 also ein Trennung der durch das Endgerät 6 erhobenen Datenwerte in Prozessdaten und Verbrauchsdaten, die im Nutzdatenbereich (Payload) in den zu unterschiedlichen Zeitpunkten gesendeten Funktelegrammen beinhaltet sind. Dabei wird das die Prozessdaten beinhaltende Funktelegramm 12 ausschließlich als anonymisiertes Prozessdaten-Funktelegramm ausgesendet, das nur eine Anonymisierungs-ID enthält, so dass dieses Funktelegramm keinem Installationsort zuordenbar ist und die enthaltenen Datenwerte keinem Nutzer (ein oder mehrere Bewohner) zuordenbar sind.

**In** einer einfach umsetzbaren Ausführungsform wird die Geräte-ID in dem entsprechend dem Standard unverschlüsselten Address-Field (Fig. 3c) durch eine in Teilen zufällig erzeugte Anonymisierung-ID ersetzt, die nur in dem das Prozessdaten-Funktelegramm aussendenden Endgerät 6 gespeichert ist. Damit kann die standardkonforme Telegrammstruktur gemäß Fig. 3a, 3b, 3c unverändert beibehalten werden, so dass keine umfangreiche Software-Anpassung weder im Funktelegramm-Sender noch im Funktelegramm-Empfänger erforderlich ist. Dabei wird ein kleiner Teil der Anonymisierungs-ID als Kennung der Liegenschaft oder als Kennung der Heizungs-Anlage verwendet, bspw. die ersten beiden Stellen der Anonymisierungs-ID. Somit können die derart anonymisierten Endgeräte zwar einer Heizungs-Anlage zugeordnet werden, nicht jedoch einer Nutzeinheit.

Wie bereits erwähnt ist es erforderlich, dass die Prozessdaten mit einer höheren Sendehäufigkeit ausgesendet werden, als dies für Verbrauchsdaten erforderlich ist, die nur zur jährlichen oder einer monatlichen Verbrauchsabrechnung verwendet werden. Diesem Erfordernis kann erfindungsgemäß Rechnung getragen werden, indem unterschiedliche Sendeschemata für die Aussendung der Verbrauchsdaten-Funktelegramme 11 und der Prozessdaten-Funktelegramme 12 verwendet werden, die sich insbesondere bei dem Sendezeitpunkt und der Sendehäufigkeit unterscheiden. Zusätzlich können sich die Funktelegramme 11, 12 auch bei der Sendeleistung, der Trägerfrequenz und/oder der Modulationsart unterscheiden. Um es unbefugten Dritten weiter zu erschweren, durch den Einsatz von - technisch sehr umfangreichen - Mitteln die Anonymisierung aufzubrechen, werden technisch mehrere Varianten vorgeschlagen.

Das Aufbrechen der Anonymisierung könnte theoretisch durch ein über eine längeren Zeitraum durchgeführtes Aufzeichnen der Verbrauchsdaten-Funktelegramme 11 und der anonymisierten Prozessdaten-Funktelegramme 12 und durch Anwendung von Korrelationsverfahren erfolgen. Beispielsweise könnte über Funkempfangsparameter, eine Zuordnung der Verbrauchsdaten-Funktelegramme 11 zu den Prozessdaten-Funktelegrammen 12 möglich sein. Hierfür geeignete Funkempfangsparater sind grundsätzlich die Signalstärke (RSSI-Pegel) oder weitere Parameter, die einen Zyklus in den Sendezeitpunkten erkennbar machen könnten. Dies kann erschwert werden, indem die Parameter des Sendeschemas der Prozessdaten-Funktelegramme 12 mittels echter Zufallszahlen randomisiert werden. Als eine echte Zufallszahl könnte beispielsweise die hochaufgelöste aktuelle Uhrzeit des Endgeräts 6 (insbesondere Minuten, Sekunden und Millisekunden), die aktuell gemessene Raumtemperatur oder eine Kombination dieser beiden Größen verwendet werden.

In sogenannten "Endgeräte-Synchronfunk-Funksystemen" senden die Endgeräte zu vom Funkempfänger vorherberechneten (prädizierten) nominalen Sendezeitpunkten. Dadurch kann der Funkempfänger nur kurze Empfangsfenster öffnen und damit in einem sehr stromsparenden Empfangsmodus betrieben werden. Der nominale Sendezeitpunkt des Endgeräts 6 wird üblicherweise mit einem Uhrenquarz als Zeitgeber berechnet. Der Uhrenquarz des Endgeräts 6 unterliegt jedoch bauteilindividuellen Toleranzen und verändert diese bei Alterungsvorgängen und wird in einem gewissen Maß auch von der aktuellen Umgebungstemperatur beeinflusst. Es ergeben sich hierdurch systemisch bedingte Abweichungen von dem nominalen Sendezeitpunkt (Drift).

Um es unbefugten Dritten zu erschweren, durch das Auswerten der Prozessdaten "Raumtemperatur" oder "Heizkörperoberflächentemperatur" auf die Umgebungstemperatur des Uhrenquarz und der geräteindividuellen Drift schließen zu können, was dann wieder eine Korrelation zwischen dem Verbrauchsdaten-Funktelegramm und Prozessdaten-Funktelegramm ermöglichen könnte, kann zusätzlich eine Normierung der für die Ermittlung des Sendezeitpunkts relevanten Variablen insbesondere auf die Umgebungstemperatur durchgeführt werden. Das bedeutet, dass die Korrelationsauswertung durch den unbefugten Dritten über die gerätespezifische Abweichung vom nominalen Sendezeitpunkt (Drift), die beim dem Verbrauchsdaten-Funktelegrammen 11 und Prozessdaten-Funktelegrammen 12 gleich sein könnte, durch die erfindungsgemäße Normierung unmöglich gemacht werden.

Im erfindungsgemäßen Verfahren kann gemäß einer Ausgestaltung ferner vorgesehen werden, dass das Prozessdaten-Funktelegramm zur schnellen Weiterverarbeitung optimal gestaltet ist. So kann erfindungsgemäß gegenüber dem Empfänger des Funktelegramms signalisieren werden, dass es sich um ein anonymisiertes Telegramm (Prozessdaten-Funktelegramm 12) handelt. Hierfür kann das Manufacturer-ID-Field der in Fig. 3b dargestellten Struktur des Funktelegramm-Headers verwendet. Das Manufacturer-ID-Field, welches den Gerätehersteller kennzeichnet, also die Herstellerkennung ist, kann einen speziellen Wert beinhalten. Um das Funktelegramm erfindungsgemäß als "Anonymisierungstelegramm" zu kennzeichnen wird statt der üblichen Herstellerkennung (bspw. "TCH") ein Wert eingetragen, der angibt, dass es sich zwar um ein Gerät des Herstellers Techem handelt, jedoch auch, dass das Funktelegramm anonymisiert wurde. Hierfür würde dann eine zweite Herstellerkennung (bspw. "TCA") verwendet werden, welche entsprechend offiziell registriert wird und somit einmalig ist.

Anhand der zweiten Herstellerkennung (im Beispiel "TCA") kann der Empfänger, bspw. eine Datensammeleinrichtung, sofort erkennen, dass es sich um ein anonymisiertes Funktelegramm, insbesondere um ein Prozessdaten-Funktelegramm 12 handelt, für welches eine besondere Weiterverarbeitung erforderlich sein kann, die sich in der Regel von der Weiterverarbeitung eines Verbrauchsdaten-Funktelegramms 11 unterscheidet.

Für Energieeffizienzverfahren im Bereich von Heizungsanlagen besonders wichtig sind Angaben, zu welcher Heizung und ggf. zu welchem Heizkreis der Heizung das Endgerät zuzuordnen ist. Daher kann die Anonymisierungs-ID erfindungsgemäß zusätzlich eine Heizkreiskennung oder eine Heizungsanlagenkennung als Teil der Anonymisierungs-ID beinhalten. Ggf. können diese Informationen auch in die Payload-Daten der Prozessdaten-Funktelegramme 12 aufgenommen sein.

Erfindungsgemäß könnte die Anonymisierungs-ID auch zyklisch durch das Endgerät 6 neu erzeugt werden. Dies erhöht nochmals die Sicherheit, weil es unbefugten Dritten weiter erschwert wird, eine Zuordnung zwischen einem Verbrauchsdaten-Funktelegramm 11 und einem Prozessdaten-Funktelegramm 12 durch ein längeres Aufzeichnen der Funktelegramme 11, 12 in einer Liegenschaft und Auffinden von Korrelationen zu erreichen. Bei dem zyklischen Ändern der Anonymisierungs-ID würden ggf. nicht die Teile der Anonymisierungs-ID verändert, welche die Zugehörigkeit zu einer Anlage bzw. einer Liegenschaft kennzeichnen.

Das erfindungsgemäße Verfahren kann in einer entsprechend gestalteten Vorrichtung ausgeführt werden. Wie in Fig. 2 schematisch dargestellt, kann das erfindungsgemäße Verfahren in fast allen Vorrichtungen eingesetzt werden, die in dem Übertragungsweg vom Endgerät 6 hin zu einer zentralen Datenverarbeitungseinrichtung 18 (bspw. IT-System eines Abrechnungsdienstleisters) liegen.

Das erfindungsgemäße Verfahren kann für viele verschiede Prozessdaten-Funktelegrammarten verwendet werden. Die Prozessdaten-Funktelegramme können wie bereits erwähnt als standardkonformes Funktelegramm ausgesendet werden. Auch Prozessdaten-Funktelegramme, die als standardkonforme Funktelegramme einen herstellerspezifischen Datenbereich (Datenkodierung) beinhalten und Prozessdaten-Funktelegrame, die ganz oder nur teilweise verschleierte Payload-Daten beinhaltet, sind für das erfindungsgemäße Verfahren zur Aussendung eines anonymisierten Prozessdaten-Funktelegramms geeignet.

Das erfindungsgemäße Verfahren kann im Endgerät 6 selbst, in einer (ggf. auch lokalen) Datensammeleinrichtung 9 oder in einer Cloud 14 als eine Cloud-Anwendung 15 umgesetzt werden.

Dabei ist es ein wesentliches Merkmal des vorgeschlagenen Verfahrens und der zur Durchführung des Verfahrens eingerichteten Vorrichtung, dass die verschlüsselten Payload-Daten der Verbrauchsdaten-Funktelegramme 12 nur im IT-System des Verbrauchsabrechnungsdienstleisters entschlüsselt werden können und die in der Payload enthaltenen Verbrauchs-Datenwerte mit der Geräte-ID in Verbindung gebracht werden könnten. Um eine Möglichkeit zur Korrelation von Geräte-ID und Anonymisierungs-ID zu verhindern, ist die Anonymisierungs-ID des Endgeräts in dem Verbrauchsablesesystem insgesamt nicht in einer Weise gespeichert, dass die Geräte-ID und Anonymisierungs-ID miteinander logisch in Verbindung gebracht werden können.

### Bezugszeichenliste

- 1: Liegenschaft / Gebäudeanordnung in einer Wohnsiedlung
- 2: Gebäude
- 3: Wohnung mit Bewohnern
- 4: Heizkörper
- 5: Heizkörperregelventil
- 6: als Heizkostenverteiler ausgebildetes Endgerät
- 7: Heizungsstrang
- 8: als Wärmerzeugungsanlage (Heizung) ausgebildeter Energieerzeuger
- 9: Datensammeleinrichtung mit Datenfernübertragungseinrichtung
- 10: Datenfernübertragungseinrichtung
- 11: Verbrauchsdaten-Funktelegramm
- 12: Prozessdaten-Funktelegramm
- 13: Mobilfunkdatenübertragungsstrecke
- 14: Cloud mit Cloud-Anwendung und Cloud-Speicher
- 15: Cloud-Anwendung
- 16: Cloud-Speicher
- 17: Internetdatenübertragungsstrecke
- 18: entfernten Datenverarbeitungseinrichtung
- 19: Ablesewert-Datenbank
- 20: Liegenschafts-Datenbank
- 21: System zur Erstellung von Verbrauchsabrechnungen
- 22: Zentrales Energiemonitoring-System / Nutzerprotal
- 23: Energie-Effizienz-Modul
- 24: Energieerzeuger einer Heizung

## Patentansprüche

1. Verfahren zum Übertragen von Daten mittels Funktelegrammen in einem Funknetz eines Verbrauchsablesesystems, bei dem
- das Funknetz ein gemeinsames Funknetz des Verbrauchsablesesystems und eines Energie-Effizienz-Systems ist,
- in einem Gebäude (2) installierte Endgeräte (6) zur Verbrauchserfassung Verbrauchs-Datenwerte erfassen und in mindestens einem Verbrauchsdaten-Funktelegramm (11) des Funknetzes zusammen mit einer Geräte-ID des Endgeräts (6) aussenden, die dem Endgerät (6) eindeutig zugeordnet und in dem Verbrauchsablesesystem bekannt ist, und
- durch die in dem Gebäude (2) installierten Endgeräte (6) Prozess-Datenwerte erfasst und in mindestens einem anonymisierten Prozessdaten-Funktelegramm (12) ausgesendet werden, wobei das Prozessdaten-Funktelegramm (12) keine dem Endgerät (6) eindeutig zugeordnete Geräte-ID, sondern mindestens eine in dem Verbrauchsablesesystem nicht bekannte Anonymisierungs-ID aufweist und von dem Endgerät (6) mit einer für optimierte Energieeinsparverfahren in Energie-Effizienz-Systemen notwendigen Häufigkeit ausgesendet wird, die gegenüber der Häufigkeit der Aussendung der Verbrauchsdaten-Funktelegramme (11) erhöht ist,
**dadurch gekennzeichnet, dass**
- die Verbrauchsdaten-Funktelegramme (11) mit einem Verbrauchsdaten-Schlüssel zum Verschlüsseln verschlüsselt und in verschlüsselter Form ausgesendet werden, wobei die Verschlüsselung des Verbrauchsdaten-Funktelegramms (11) mit dem Verbrauchsdaten-Schlüssel in dem Endgerät (6) erfolgt,
- ein Verbrauchsdaten-Schlüssel zum Entschlüsseln des Verbrauchsdaten-Funktelegramms nur innerhalb einer zentralen Daten-Umgebung des Verbrauchsablesesystems vorliegt,
- die Anonymisierungs-ID zusammen mit der Geräte-ID nur in dem die Prozessdaten-Funktelegramme (12) aussendenden Endgerät (6) bekannt ist, so dass eine Korrelation von Geräte-ID und Anonymisierungs-ID ausschließlich in dem Endgerät (6) möglich ist,
- die Anonymisierungs-ID zyklisch, zu fest oder stochastisch vorgegebenen Zeitpunkten oder ereignisgesteuert, durch das Endgerät (6) geändert wird, wobei ein Teil der Anonymisierungs-ID als eine zufällig erzeugte Kennung durch das die Prozessdaten-Funktelegramme (12) aussendende Endgerät (6) erzeugt wird und ein weiterer Teil der Anonymisierungs-ID eine nicht zufällig erzeugte Kennung ist, die eine Zuordnung zu einer energetischen Einheit des Energie-Effizienz-Systems ermöglicht, so dass die Prozessdaten-Funktelegramme (12) in dem Energie-Effizienz-System einem Gebäude (2) oder einer Heizungsanlage basierend auf zumindest diesem weiteren Teil der Anonymisierungs-ID zugeordnet werden kann.

2. Verfahren nach Anspruch 1, **dadurch gekennzeichnet, dass** das Prozessdaten-Funktelegramm (12) zusätzlich zu der Anonymisierungs-ID eine Anonymisierungs-Kennung aufweist, die das Prozessdaten-Funktelegramm (12) als solches kennzeichnet.

3. Verfahren nach einem der vorhergehenden Ansprüche, **dadurch gekennzeichnet, dass** das Prozessdaten-Funktelegramm (12) in Nutzdaten Ordnungsbegriffe aufweist.

4. Verfahren nach einem der vorhergehenden Ansprüche, **dadurch gekennzeichnet, dass** das Endgerät (6) die Verbrauchsdaten-Funktelegramme (11) nach einem ersten Sendeschema in das Funknetz sendet, mit dem die Sendezeit, die Sendeleistung, die Trägerfrequenz und/oder die Modulation der durch das Endgerät (6) ausgesandten Verbrauchsdaten-Funktelegramme (11) festgelegt werden, und dass das Endgerät (6) die Prozessdaten-Funktelegramme (12) nach einem zweiten Sendeschema in das Funknetz sendet, mit dem die Sendezeit, die Sendeleistung, die Trägerfrequenz und/oder die Modulation der durch das Endgerät (6) ausgesandten Prozessdaten-Funktelegramme (12) festgelegt werden, wobei sich das erste und das zweite Sendeschema zumindest in einem der Parameter Sendezeit, Sendeleistung, Trägerfrequenz oder Modulation unterscheiden und dass das zweite Sendeschema bei mindestens einem Parameter randomisiert wird.

5. Verfahren nach einem der vorhergehenden Ansprüche, **dadurch gekennzeichnet, dass** das Prozessdaten-Funktelegramm (12) oder Nutzdaten in dem Prozessdaten-Funktelegramm (12) mit einem Prozessdaten-Schlüssel verschlüsselt werden und dass Nutzdaten in dem Verbrauchsdaten-Funktelegramm (11) mit einem Verbrauchsdaten-Schlüssel verschlüsselt werden, wobei der Prozessdaten-Schlüssel verschieden ist vom Verbrauchsdaten-Funkschlüssel.

6. Verfahren nach einem der vorhergehenden Ansprüche, **dadurch gekennzeichnet, dass** das zyklische Ändern der Anonymisierungs-ID alternierend nach einem pseudozufälligen Verfahren mit einem softwarebasierten Zufallsgenerator und durch Variation mit echten Zufallszahlen unter Einbeziehen von nicht vorhersagbaren Parametern erfolgt.

7. Verfahren zur Anonymisierung eines durch ein Endgerät (6) ausgesendeten Funktelegramms, insbesondere nach einem der vorhergehenden Ansprüche, **dadurch gekennzeichnet, dass** eine in einem Gebäude (2) installierte lokale Datensammeleinrichtung (9) nach dem Empfang eines Prozessdaten-Funktelegramms (12), welches eine Geräte-ID des Endgeräts (6) beinhaltet und somit nicht anonymisierte Daten enthält, von dem Endgerät (6) die Geräte-ID des Endgeräts (6) in dem Prozessdaten-Funktelegramm (12) durch eine in der Datensammeleinrichtung (9) erzeugte Anonymisierungs-ID ersetzt.

8. Endgerät zur Verbrauchserfassung von Verbrauchs-Datenwerte in einem Verbrauchsablesesystem, wobei das Endgerät (6) dazu eingerichtet ist, die Verbrauchs-Datenwerte in mindestens einem Verbrauchsdaten-Funktelegramm (11) eines Funknetzes des Verbrauchsablesesystems zusammen mit einer Geräte-ID des Endgeräts (6) auszusenden, die dem Endgerät (6) eindeutig zugeordnet und in einem Verbrauchsablesesystem bekannt ist, und das Endgerät (6) weiter dazu eingerichtet ist, zusätzlich zu dem mindestens einen Verbrauchsdaten-Funktelegrammen (11) auch mindestens ein Prozessdaten-Funktelegramme (12) auszusenden, das sich von dem Verbrauchsdaten-Funktelegramm (11) zumindest dadurch unterscheidet, dass in dem Prozessdaten-Funktelegramm (12) anstelle der Geräte-ID eine Anonymisierungs-ID ausgesendet wird, die dem Endgerät (6) in dem Verbrauchsablesesystem nicht zuordenbar ist, die Prozessdaten-Funktelegramme (12) mit einer für optimierte Energieeinsparverfahren in Energie-Effizienz-Systemen notwendigen Häufigkeit auszusenden, die gegenüber der Häufigkeit der Aussendung der Verbrauchsdaten-Funktelegramme (11) erhöht ist, **dadurch gekennzeichnet, dass**
die Anonymisierungs-ID zusammen mit der Geräte-ID nur in dem die Prozessdaten-Funktelegramme (12) aussendenden Endgerät (6) bekannt ist, so dass eine Korrelation von Geräte-ID und Anonymisierungs-ID ausschließlich in dem Endgerät (6) möglich ist, und
eine Recheneinheit des Endgeräts (6) dazu eingerichtet ist, die Anonymisierungs-ID zyklisch, zu fest oder stochastisch vorgegebenen Zeitpunkten oder ereignisgesteuert, zu ändern, wobei ein Teil der Anonymisierungs-ID als eine zufällig erzeugte Kennung durch das die Prozessdaten-Funktelegramme (12) aussendende Endgerät (6) erzeugt wird und ein weiterer Teil der Anonymisierungs-ID eine nicht zufällig erzeugte Kennung ist, die eine Zuordnung zu einer energetischen Einheit des Energie-Effizienz-Systems ermöglicht, so dass die Prozessdaten-Funktelegramme (12) in dem Energie-Effizienz-System einem Gebäude (2) oder einer Heizungsanlage basierend auf zumindest diesem weiteren Teil der Anonymisierungs-ID zugeordnet werden kann.

9. Endgerät nach Anspruch 8, **dadurch gekennzeichnet, dass** das Endgerät (6) dazu eingerichtet ist, Nutzdaten in dem Prozessdaten-Funktelegramm (12) zu verschleiern, so dass ein Datenwert insbesondere nur mit Kenntnis der absoluten Position der einzelnen Bits in den Nutzdaten des Prozessdaten-Funktelegramms (12) dekodierbar ist.

10. Vorrichtung zum Übertragen von Daten mittels Funktelegrammen in einem Funknetz eines Verbrauchsablesesystems, mit
- in einem Gebäude (2) installierten Endgeräten (6) zur Verbrauchserfassung mit einer Recheneinheit, die dazu eingerichtet ist, Verbrauchs-Datenwerte zu erfassen und in mindestens einem Verbrauchsdaten-Funktelegramm (11) des Funknetzes zusammen mit einer Geräte-ID des Endgeräts (6) auszusenden, die dem Endgerät (6) eindeutig zugeordnet und in dem Verbrauchsablesesystem bekannt ist, wobei die Recheneinheit der Endgeräte (6) weiter dazu eingerichtet ist, in dem Gebäude (2) Prozess-Datenwerte zu erfassen und in mindestens einem Prozessdaten-Funktelegramm (12) auszusenden, wobei das Prozessdaten-Funktelegramm (12) keine dem Endgerät eindeutig zugeordnete Geräte-ID, sondern mindestens eine in dem Verbrauchsablesesystem nicht bekannte Anonymisierungs-ID aufweist, die Prozessdaten-Funktelegramme (12) mit einer für optimierte Energieeinsparverfahren in Energie-Effizienz-Systemen notwendigen Häufigkeit auszusenden, die gegenüber der Häufigkeit der Aussendung der Verbrauchsdaten-Funktelegramme (11) erhöht ist, und
- mit einer entfernten Datenverarbeitungseinrichtung (18) innerhalb einer zentralen Daten-Umgebung des Verbrauchsablesesystems mit einer Recheneinheit,
wobei das Funknetz ein gemeinsames Funknetz des Verbrauchsablesesystems und eines Energie-Effizienz-Systems ist,
**dadurch gekennzeichnet, dass**
die Recheneinheit des Endgeräts (6) weiter dazu eingerichtet ist,
- die Verbrauchsdaten-Funktelegramme (11) mit einem Verbrauchsdaten-Schlüssel zum Verschlüsseln zu verschlüsseln und in verschlüsselter Form auszusenden, wobei die Verschlüsselung des Verbrauchsdaten-Funktelegramms (11) mit dem Verbrauchsdaten-Schlüssel in dem Endgerät (6) erfolgt
- die Anonymisierungs-ID zyklisch, zu fest oder stochastisch vorgegebenen Zeitpunkten oder ereignisgesteuert, zu ändern, wobei ein Teil der Anonymisierungs-ID als eine zufällig erzeugte Kennung durch das die Prozessdaten-Funktelegramme (12) aussendende Endgerät (6) erzeugt wird und ein weiterer Teil der Anonymisierungs-ID eine nicht zufällig erzeugte Kennung ist, die eine Zuordnung zu einer energetischen Einheit des Energie-Effizienz-Systems ermöglicht, so dass die Prozessdaten-Funktelegramme (12) in dem Energie-Effizienz-System einem Gebäude (2) oder einer Heizungsanlage basierend auf zumindest diesem weiteren Teil der Anonymisierungs-ID zugeordnet werden kann, und
dass die Recheneinrichtung der Datenverarbeitungseinrichtung (18) zum Entschlüsseln der empfangenen Verbrauchsdaten-Funkdatentelegramme (11) mittels eines Verbrauchsdaten-Schlüssel zum Entschlüsseln des Verbrauchsdaten-Funktelegramms (11) eingerichtet ist, wobei der Verbrauchsdaten-Schlüssel zum Entschlüsseln des Verbrauchsdaten-Funktelegramms (11) nur innerhalb der zentralen Daten-Umgebung vorliegt.

## Claims

1. Method for transmitting data by means of radio telegrams in a radio network of a consumption metering system, in which
- the radio network is a joint radio network of the consumption metering system and an energy efficiency system,
- end devices (6) installed in a building (2) gather consumption data values for consumption metering and transmit them in at least one consumption data radio telegram (11) of the radio network together with a device ID of the end device (6), which is uniquely assigned to the end device (6) and known in the consumption metering system, and
- process data values are gathered by the end devices (6) installed in the building (2) and transmitted in at least one anonymized process data radio telegram (12), wherein the process data radio telegram (12) does not have a device ID uniquely assigned to the end device (6), but comprises at least one anonymization ID which is not known in the consumption metering system and is transmitted by the end device (6) with a frequency which is necessary for optimized energy saving methods in energy efficiency systems and which is increased compared with the frequency of transmission of the consumption data radio telegrams (11),
**characterized in that**
- the consumption data radio telegrams (11) are encrypted with a consumption data key for encryption and transmitted in encrypted form, the consumption data radio telegram (11) is encrypted with the consumption data key in the end device (6),
- a consumption data key for decrypting the consumption data radio telegram is only available within a central data environment of the consumption metering system,
- the anonymization ID together with the device ID is only known in the end device (6) transmitting the process data radio telegrams (12), so that a correlation of device ID and anonymization ID is only possible in the end device (6),
- the anonymization ID is changed cyclically, at fixed or stochastically predefined times or event-controlled, by the end device (6), wherein a part of the anonymization ID is generated as a randomly generated identifier by the end device (6) transmitting the process data radio telegrams (12) and another part of the anonymization ID is a non-randomly generated identifier, which enables an assignment to an energy unit of the energy efficiency system, so that the process data radio telegrams (12) in the energy efficiency system can be assigned to a building (2) or a heating system based on at least this further part of the anonymization ID.

2. Method according to claim 1, **characterized in that** the process data radio telegram (12) comprises, in addition to the anonymization ID, an anonymization identifier which identifies the process data radio telegram (12) as such.

3. Method according to one of the preceding claims, **characterized in that** the process data radio telegram (12) comprises ordinal terms in user data.

4. Method according to one of the preceding claims, **characterized in that** the end device (6) transmits the consumption data radio telegrams (11) into the radio network according to a first transmission scheme, with which the transmission time, the transmission power, the carrier frequency and/or the modulation of the consumption data radio telegrams (11) transmitted by the end device (6) are determined, and **in that** the end device (6) transmits the process data radio telegrams (12) into the radio network according to a second transmission scheme, with which the transmission time, the transmission power, the carrier frequency and/or the modulation of the process data radio telegrams (12) transmitted by the end device (6) are determined, wherein the first and the second transmission scheme differ in at least one of the parameters transmission time, transmission power, carrier frequency or modulation and that the second transmission scheme is randomized for at least one parameter.

5. Method according to one of the preceding claims, **characterized in that** the process data radio telegram (12) or user data in the process data radio telegram (12) is encrypted with a process data key and that user data in the consumption data radio telegram (11) is encrypted with a consumption data key, wherein the process data key is different from the consumption data radio key.

6. Method according to one of the preceding claims, **characterized in that** the cyclic changing of the anonymization ID takes place alternately according to a pseudo-random method with a software-based random number generator and by variation with real random numbers including non-predictable parameters.

7. Method for anonymizing a radio telegram transmitted by an end device (6), in particular according to one of the preceding claims, **characterized in that** a local data collection device (9) installed in a building (2), after receiving a process data radio telegram (12), which contains a device ID of the end device (6) and thus contains non-anonymized data, replaces the device ID of the end device (6) in the process data radio telegram (12) with an anonymization ID generated in the data collection device (9).

8. End device for gathering consumption data values in a consumption metering system, wherein the end device (6) is adapted to transmit the consumption data values in at least one consumption data radio telegram (11) of a radio network of the consumption metering system together with a device ID of the end device (6), which is uniquely assigned to the end device (6) and is known in a consumption metering system, and the end device (6) is further adapted to also transmit at least one process data radio telegram (12) in addition to the at least one consumption data radio telegram (11), which differs from the consumption data radio telegram (11) at least in that in the process data radio telegram (12), instead of the device ID, an anonymization ID is transmitted which cannot be assigned to the end device (6) in the consumption metering system, the process data radio telegrams (12) are transmitted with a frequency which is necessary for optimized energy saving methods in energy efficiency systems and which is increased compared with the frequency of transmission of the consumption data radio telegrams (11), **characterized in that**
the anonymization ID together with the device ID is known only in the end device (6) transmitting the process data radio telegrams (12), so that a correlation of device ID and anonymization ID is possible only in the end device (6), and
a computing unit of the end device (6) is adapted to change the anonymization ID cyclically, at fixed or stochastically predefined times or event-controlled, wherein a part of the anonymization ID is generated as a randomly generated identifier by the end device (6) transmitting the process data radio telegrams (12) and a further part of the anonymization ID is a non-randomly generated identifier, which enables an assignment to an energy unit of the energy efficiency system, so that the process data radio telegrams (12) in the energy efficiency system can be assigned to a building (2) or a heating system based on at least this further part of the anonymization ID.

9. End device according to claim 8, **characterized in that** the end device (6) is adapted to disguise user data in the process data radio telegram (12), so that a data value can in particular only be decoded with knowledge of the absolute position of the individual bits in the user data of the process data radio telegram (12).

10. Apparatus for transmitting data by means of radio telegrams in a radio network of a consumption metering system, with
- end devices (6) installed in a building (2) for gathering consumption data, having a computing unit which is adapted to gather consumption data values and to transmit them in at least one consumption data radio telegram (11) of the radio network together with a device ID of the end device (6), which is uniquely assigned to the end device (6) and is known in the consumption reading system, wherein the computing unit of the end devices (6) is further adapted for gathering process data values in the building (2) and transmitting them in at least one process data radio telegram (12), wherein the process data radio telegram (12) comprises no device ID uniquely assigned to the end device, but at least one anonymization ID not known in the consumption metering system, for transmitting the process data radio telegrams (12) with a frequency necessary for optimized energy saving methods in energy efficiency systems, which frequency is increased compared to the frequency of transmission of the consumption data radio tel
- with a remote data processing device (18) within a central data environment of the consumption metering system with a computing unit,
wherein the radio network is a shared radio network of the consumption metering system and an energy efficiency system,
**characterized in that**
the computing unit of the end device (6) is further adapted for
- encrypting the consumption data radio telegrams (11) with a consumption data key for encryption and transmitting them in encrypted form, wherein the consumption data radio telegram (11) is encrypted with the consumption data key in the end device (6)
- changing the anonymization ID cyclically, at fixed or stochastically predefined times or event-controlled, wherein a part of the anonymization ID is generated as a randomly generated identifier by the end device (6) transmitting the process data radio telegrams (12) and another part of the anonymization ID is a non-randomly generated identifier, which enables an assignment to an energy unit of the energy efficiency system, so that the process data radio telegrams (12) in the energy efficiency system can be assigned to a building (2) or a heating system based on at least this further part of the anonymization ID, and
**in that** the computing device of the data processing device (18) is adapted for decrypting the received consumption data radio telegrams (11) by means of a consumption data key for decrypting the consumption data radio telegram (11), wherein the consumption data key for decrypting the consumption data radio telegram (11) is only available within the central data environment.

## Revendications

1. Procédé de transmission de données au moyen de télégrammes radio dans un réseau radio d'un système de mesure de la consommation, dans lequel
- le réseau radio est un réseau radio commun au système de mesure de la consommation et à un système d'efficacité énergétique,
- des appareils terminaux (6) installés dans un bâtiment (2) recueillent des valeurs de données de consommation pour le comptage de la consommation et les transmettent dans au moins un télégramme radio de données de consommation (11) du réseau radio avec un identifiant d'appareil de l'appareil terminal (6), qui est attribué de manière unique à l'appareil terminal (6) et connu dans le système de comptage de la consommation, et
- les valeurs des données de processus sont recueillies par les dispositifs finaux (6) installés dans le bâtiment (2) et transmises dans au moins un radiotélégramme de données de processus anonymisées (12), dans lequel le radiotélégramme de données de processus (12) n'a pas d'identifiant de dispositif attribué de manière unique au dispositif final (6), mais comprend au moins un identifiant d'anonymisation qui n'est pas connu dans le système de mesure de la consommation et est transmis par le dispositif final (6) à une fréquence qui est nécessaire pour optimiser les méthodes d'économie d'énergie dans les systèmes d'efficacité énergétique et qui est augmentée par rapport à la fréquence de transmission des radiotélégrammes de données de consommation (11),
**caractérisé en ce que**
- les radiotélégrammes de données de consommation (11) sont cryptés avec une clé de cryptage des données de consommation et transmis sous forme cryptée, le radiotélégramme de données de consommation (11) est crypté avec la clé de données de consommation dans l'appareil final (6),
- une clé de données de consommation permettant de décrypter le télégramme radio de données de consommation n'est disponible que dans un environnement de données central du système de mesure de la consommation,
- l'ID d'anonymisation et l'ID de l'appareil ne sont connus que de l'appareil final (6) qui transmet les télégrammes radio de données de processus (12), de sorte qu'une corrélation entre l'ID de l'appareil et l'ID d'anonymisation n'est possible qu'au niveau de l'appareil final (6),
- l'ID d'anonymisation est modifié cycliquement, à des moments prédéfinis fixes ou stochastiques ou contrôlés par des événements, par l'appareil final (6), une partie de l'ID d'anonymisation étant générée comme un identifiant aléatoire par l'appareil final (6) transmettant les télégrammes radio de données de processus (12) et une autre partie de l'ID d'anonymisation étant un identifiant généré de manière non aléatoire, qui permet une affectation à une unité énergétique du système d'efficacité énergétique, de sorte que les télégrammes radio de données de processus (12) dans le système d'efficacité énergétique peuvent être affectés à un bâtiment (2) ou à un système de chauffage sur la base d'au moins cette autre partie de l'ID d'anonymisation.

2. Procédé selon la revendication 1, **caractérisé en ce que** le radiotélégramme de données de processus (12) comprend, outre l'ID d'anonymisation, un identifiant d'anonymisation qui identifie le radiotélégramme de données de processus (12) en tant que tel.

3. Procédé selon l'une des revendications précédentes, **caractérisé en ce que** le télégramme radio de données de processus (12) comprend des termes ordinaux dans les données utilisateur.

4. Procédé selon l'une des revendications précédentes, **caractérisé en ce que** l'appareil terminal (6) transmet les télégrammes radio de données de consommation (11) dans le réseau radio selon un premier schéma de transmission, avec lequel le temps de transmission, la puissance de transmission, la fréquence porteuse et/ou la modulation des télégrammes radio de données de consommation (11) transmis par l'appareil terminal (6) sont déterminés, et **en ce que** l'appareil terminal (6) transmet les télégrammes radio de données de processus (12) dans le réseau radio selon un deuxième schéma de transmission, dans lequel le temps de transmission, la puissance de transmission, la fréquence porteuse et/ou la modulation des télégrammes radio de données de processus (12) transmis par le dispositif terminal (6) sont déterminés, dans lequel le premier et le second schéma de transmission diffèrent dans au moins un des paramètres temps de transmission, puissance de transmission, fréquence porteuse ou modulation et dans lequel le second schéma de transmission est aléatoire pour au moins un paramètre.

5. Procédé selon l'une des revendications précédentes, **caractérisé en ce que** le radiotélégramme de données de processus (12) ou les données d'utilisateur dans le radiotélégramme de données de processus (12) sont chiffrés avec une clé de données de processus et que les données d'utilisateur dans le radiotélégramme de données de consommation (11) sont chiffrées avec une clé de données de consommation, la clé de données de processus étant différente de la clé radio de données de consommation.

6. Procédé selon l'une des revendications précédentes, **caractérisé en ce que** le changement cyclique de l'identifiant d'anonymisation a lieu alternativement selon une méthode pseudo-aléatoire avec un générateur de nombres aléatoires basé sur un logiciel et par variation avec des nombres aléatoires réels comprenant des paramètres non prévisibles.

7. Procédé d'anonymisation d'un télégramme radio transmis par un dispositif d'extrémité (6), notamment selon l'une des revendications précédentes, **caractérisé en ce qu'**un dispositif local de collecte de données (9) installé dans un bâtiment (2), après avoir reçu un télégramme radio de données de processus (12), qui contient un identifiant de dispositif du dispositif d'extrémité (6) et contient donc des données non anonymisées, remplace l'identifiant de dispositif du dispositif d'extrémité (6) dans le télégramme radio de données de processus (12) par un identifiant d'anonymisation généré dans le dispositif de collecte de données (9).

8. Dispositif terminal pour collecter des valeurs de données de consommation dans un système de mesure de la consommation, dans lequel le dispositif terminal (6) est adapté pour transmettre les valeurs de données de consommation dans au moins un télégramme radio de données de consommation (11) d'un réseau radio du système de mesure de la consommation avec un ID de dispositif du dispositif terminal (6), qui est attribué de manière unique au dispositif terminal (6) et est connu dans un système de mesure de la consommation, et le dispositif terminal (6) est en outre adapté pour transmettre également au moins un télégramme radio de données de processus (12) en plus du au moins un télégramme radio de données de consommation (11), qui diffère du radiotélégramme de données de consommation (11) au moins en ce que dans le radiotélégramme de données de consommation (12), au lieu de l'ID de l'appareil, un ID d'anonymisation est transmis, qui ne peut pas être attribué à l'appareil final (6) dans le système de mesure de la consommation, les radiotélégrammes de données de consommation (12) sont transmis à une fréquence qui est nécessaire pour des méthodes optimisées d'économie d'énergie dans les systèmes d'efficacité énergétique et qui est augmentée par rapport à la fréquence de transmission des radiotélégrammes de données de consommation (11), **caractérisé en ce que**
l'ID d'anonymisation et l'ID de l'appareil ne sont connus que de l'appareil final (6) qui transmet les télégrammes radio de données de processus (12), de sorte qu'une corrélation entre l'ID de l'appareil et l'ID d'anonymisation n'est possible que dans l'appareil final (6), et
une unité de calcul de l'appareil final (6) est adaptée pour modifier l'ID d'anony-misation de manière cyclique, à des moments prédéfinis fixes ou stochastiques ou contrôlés par des événements, une partie de l'ID d'anonymisation étant générée comme un identifiant aléatoire par l'appareil final (6) transmettant les télégrammes radio de données de processus (12) et une autre partie de l'ID d'anonymisation étant un identifiant généré de manière non aléatoire, qui permet une affectation à une unité énergétique du système d'efficacité énergétique, de sorte que les télégrammes radio de données de processus (12) dans le système d'efficacité énergétique peuvent être affectés à un bâtiment (2) ou à un système de chauffage sur la base d'au moins cette autre partie de l'ID d'anony-misation.

9. Dispositif terminal selon la revendication 8, **caractérisé en ce que** le dispositif terminal (6) est adapté pour déguiser les données d'utilisateur dans le radiotélégramme de données de processus (12), de sorte qu'une valeur de données ne peut notamment être décodée qu'avec la connaissance de la position absolue des différents bits dans les données d'utilisateur du radiotélégramme de données de processus (12).

10. Dispositif de transmission de données au moyen de télégrammes radio dans un réseau radio d'un système de comptage de la consommation, avec
- des appareils terminaux (6) installés dans un bâtiment (2) pour collecter des données de consommation, dotés d'une unité informatique adaptée pour collecter des valeurs de données de consommation et les transmettre dans au moins un télégramme radio de données de consommation (11) du réseau radio avec un ID d'appareil de l'appareil terminal (6), attribué de manière unique à l'appareil terminal (6) et connu dans le système de relevé de la consommation, dans lequel l'unité informatique des appareils terminaux (6) est également adaptée pour collecter des valeurs de données de processus dans le bâtiment (2) et les transmettre dans au moins un télégramme radio de données de processus (12), dans lequel le télégramme radio de données de processus (12) ne comprend pas d'identifiant d'appareil attribué de manière unique à l'appareil final, mais au moins un identifiant d'anonymisation non connu dans le système de relevé de la consommation, pour transmettre les télégrammes radio de données de processus (12) à une fréquence nécessaire pour optimiser les méthodes d'économie d'énergie dans les systèmes d'efficacité énergétique, cette fréquence étant augmentée par rapport à la fréquence de transmission des télégrammes radio de données de consommation.
- avec un dispositif de traitement des données à distance (18) situé dans un environnement central de données du système de mesure de la consommation et doté d'une unité de calcul,
dans lequel le réseau radio est un réseau radio commun au système de mesure de la consommation et à un système d'efficacité énergétique,
**caractérisé en ce que**
l'unité de calcul de l'appareil terminal (6) est en outre adaptée pour
- chiffrer les radiotélégrammes de données de consommation (11) à l'aide d'une clé de chiffrement des données de consommation et les transmettre sous forme chiffrée, le radiotélégramme de données de consommation (11) étant chiffré à l'aide de la clé de données de consommation dans l'appareil terminal (6)
- changer l'ID d'anonymisation de manière cyclique, à des moments prédéfinis fixes ou stochastiques ou contrôlés par des événements, une partie de l'ID d'anonymisation étant générée de manière aléatoire par l'appareil final (6) transmettant les télégrammes radio de données de processus (12) et une autre partie de l'ID d'anonymisation étant un identificateur non généré de manière aléatoire, qui permet une affectation à une unité énergétique du système d'efficacité énergétique, de sorte que les télégrammes radio de données de processus (12) dans le système d'efficacité énergétique peuvent être affectés à un bâtiment (2) ou à un système de chauffage sur la base d'au moins cette autre partie de l'ID d'anonymisation, et
le dispositif informatique du dispositif de traitement des données (18) est adapté au décryptage des télégrammes radio de données de consommation reçus (11) au moyen d'une clé de données de consommation pour le décryptage du télégramme radio de données de consommation (11), la clé de données de consommation pour le décryptage du télégramme radio de données de consommation (11) n'étant disponible que dans l'environnement central de données.
